# EUROPEAN PATENT APPLICATION

(11) **EP 4 647 723 A1**
(43) Date of publication of application: **12.11.2025**
(21) Application number: 24814420.6
(22) Date of filing: 28.05.2024
(51) Int. Cl.: G01C 21/34

(54) **NAVIGATION SYSTEM AND METHOD, AND ELECTRONIC DEVICE**

(30) Priority: 29.05.2023 CN 202310622786
(71) Applicant: Huawei Technologies Co., Ltd., Shenzhen, Guangdong 518129 (CN)
(72) Inventor: WANG, Kang, Shenzhen, Guangdong 518129 (CN); ZHAO, Mingwei, Shenzhen, Guangdong 518129 (CN)
(74) Representative: Goddar, Heinz J.
(86) International application number: PCT/CN2024/095707
(87) International publication number: WO 2024/245223

(57) **Abstract**

This application provides a navigation system and method, and an electronic device. A server may determine a recommended route based on a start location of an electronic device and a destination, determine a poor-network-connection road section in the recommended route, and then determine a no-network-connection route segment in the recommended route, where the no-network-connection route segment includes the poor-network-connection road section. When the electronic device moves to a first route segment in the recommended route, the electronic device may obtain high-precision road data of the no-network-connection route segment from the server, and display a lane-level navigation route of the no-network-connection route segment based on the high-precision road data of the no-network-connection route segment. When the electronic device moves to the no-network-connection route segment in the recommended route, the electronic device may obtain high-precision road data of a second route segment from the server, and display a lane-level navigation route of the second route segment based on the high-precision road data of the second route segment. In this solution, the electronic device can quickly and accurately display a lane-level navigation route.

## Description

This application claims priority to Chinese Patent Application No. 202310622786.X, filed with the China National Intellectual Property Administration on May 29, 2023 and entitled "NAVIGATION SYSTEM AND METHOD, AND ELECTRONIC DEVICE", which is incorporated herein by reference in its entirety.

### TECHNICAL FIELD

This application relates to the field of intelligent driving technologies, and in particular, to a navigation system and method, and an electronic device.

### BACKGROUND

With development of the automobile industry, more users purchase vehicles. The users may travel by using the vehicles, to facilitate the travel of the users.

With development of urban traffic, urban road construction becomes more complex, and roads for traveling of the vehicles becomes more complex. A user may provide a navigation route from a start location to a destination for a vehicle by using a map application on an electronic device. The navigation route may also be referred to as road-level navigation. The road-level navigation may indicate path planning of the vehicle from the start location to the destination, for example, a traveling direction of the vehicle, a road shape, and a traveling policy (for example, a turn/U-turn/straight-through location).

However, precision of the road-level navigation is not high. For example, information such as a road sign cannot be displayed. As a result, the vehicle misses a turn/U-turn/straight-through occasion. In this case, the vehicle can only continue to travel to a next intersection and switch to turn/turn around/go straight and then turn/turn around/go straight, resulting in poor user experience. Currently, a lane-level navigation route already exists to provide a high-precision navigation route for the user. However, a data amount of the lane-level route is large, and downloading needs a long time. Consequently, the electronic device cannot update the lane-level navigation route in a timely manner. How to display the lane-level navigation route in a timely and accurate manner is to be further studied.

### SUMMARY

This application provides a navigation system and method, and an electronic device, so that the electronic device can quickly and accurately display a lane-level navigation route.

According to a first aspect, this application provides a navigation system, including an electronic device and a server. The electronic device is configured to receive and respond to a first user operation, and send a start location of the electronic device and a destination entered by a user to the server. The server is configured to determine a recommended route by using the start location of the electronic device as a start point and using the destination as an end point. The server is further configured to determine a poor-network-connection road section included in the recommended route. The server is further configured to determine a no-network-connection route segment in the recommended route, where the no-network-connection route segment includes the poor-network-connection road section. The electronic device is further configured to: obtain the recommended route from the server, and perform navigation based on the recommended route. The electronic device is specifically configured to: obtain high-precision road data of the no-network-connection route segment from the server when the electronic device moves to a first route segment in the recommended route, where the no-network-connection route segment is a next route segment adjacent to the first route segment in the recommended route; display a lane-level navigation route of the no-network-connection route segment based on the high-precision road data of the no-network-connection route segment; obtain high-precision road data of a second route segment from the server when the electronic device moves to the no-network-connection route segment in the recommended route, where the second route segment is a next route segment, adjacent to the no-network-connection route segment, in the recommended route; and display a lane-level navigation route of the second route segment based on the high-precision road data of the second route segment.

In a possible implementation, the poor-network-connection road section may be a special road section, for example, a tunnel road section or a canyon road section, and the server may determine the poor-network-connection road section based on the special road section.

In another possible implementation, the server may alternatively receive a large amount of feedback data reported by a user group, to determine the poor-network-connection road section.

In this way, the server may divide the recommended route into a plurality of route segments, and the electronic device may obtain high-precision road data of each route segment by segment, and display a lane-level navigation route by segment. In this way, a speed of obtaining the high-precision road data by the electronic device is increased, and a speed and accuracy of displaying the lane-level navigation route by the electronic device are improved. In addition, when the recommended route includes the poor-network-connection road section, the server may divide the poor-network-connection road section into one route segment (the no-network-connection route segment), to ensure that when the electronic device moves to the no-network-connection route segment, the high-precision road data of the next route segment adjacent to the no-network-connection route segment can be obtained.

With reference to the first aspect, in a possible implementation, a distance between an end point of the no-network-connection route segment and an end point of the poor-network-connection road section is equal to a first length. In this way, it can be ensured that when the electronic device moves to the no-network-connection route segment, the high-precision road data of the next route segment adjacent to the no-network-connection route segment can be obtained.

With reference to the first aspect, in a possible implementation, the recommended route further includes at least two route segments, and lengths of the at least two route segments are the same. In this way, the server may obtain a plurality of route segments through division based on a preset length.

With reference to the first aspect, in a possible implementation, the lengths of the at least two route segments are equal to the first length.

In this way, when the server determines that the poor-network-connection road section exists in the recommended route, the server may add a route whose distance is the first length after the end point of the poor-network-connection road section to obtain the no-network-connection route segment, to ensure that when the electronic device moves to the no-network-connection route segment, the high-precision road data of the next route segment adjacent to the no-network-connection route segment can be obtained.

With reference to the first aspect, in a possible implementation, the at least two route segments are route segments before the first route segment; or the at least two route segments are route segments after the second route segment; or the at least two route segments include a route segment before the first route segment and a route segment after the second route segment.

With reference to the first aspect, in a possible implementation, an end point of the first route segment is a start point of the poor-network-connection road section, and a start point of the no-network-connection route segment is the start point of the poor-network-connection road section. In this way, when the server determines that the poor-network-connection road section exists in the recommended route, the server may use the start point of the poor-network-connection road section as the start point of the no-network-connection route segment. In this way, when a length of the poor-network-connection road section is long, the start point of the poor-network-connection road section is used as the start point of the no-network-connection route segment, so that a distance length of the no-network-connection route segment can be reduced, to increase a speed of obtaining the high-precision road data of the no-network-connection route segment by the electronic device.

With reference to the first aspect, in a possible implementation, the electronic device is specifically configured to send a first message to the server when the electronic device moves between the end point of the no-network-connection route segment and the end point of the poor-network-connection road section; and the server is further configured to send the high-precision road data of the second route segment to the electronic device in response to the first message. In this way, when the electronic device moves between the end point of the poor-network-connection road section in the no-network-connection route segment and the end point of the no-network-connection route segment, the road section does not include the poor-network-connection road section, and the electronic device may obtain the high-precision road data of the second route segment.

With reference to the first aspect, in a possible implementation, the server is further configured to divide the recommended route based on the preset length, to obtain a plurality of route segments, where the plurality of route segments include a third route segment, a fourth route segment, and a fifth route segment, an end point of the third route segment is a start point of the fourth route segment, and an end point of the fourth route segment is a start point of the fifth route segment; the server is specifically configured to: when the fourth route segment includes the poor-network-connection road section, determine the end point of the no-network-connection route segment based on the end point of the poor-network-connection road section and the first length, and adjust the end point of the fourth route segment to the end point of the no-network-connection route segment, where the fourth route segment after the end point adjustment is the no-network-connection route segment; and the server is further configured to adjust the start point of the fifth route segment to the end point of the no-network-connection route segment, where the fifth route segment after the start point adjustment is the second route segment. The third route segment is the first route segment. In this way, when the poor-network-connection road section is located in the same route segment, the server may adjust the end point of the poor-network-connection road section, and the server may obtain the no-network-connection route segment according to this method.

With reference to the first aspect, in a possible implementation, the server is specifically configured to: when the fourth route segment includes the poor-network-connection road section, determine the end point of the no-network-connection route segment based on the end point of the poor-network-connection road section and the first length, adjust the start point of the fourth route segment to a start point of the poor-network-connection road section, and adjust the end point of the fourth route segment to the end point of the no-network-connection route segment, where the fourth route segment after the start point adjustment and the end point adjustment is the no-network-connection route segment; and the server is specifically configured to adjust the end point of the third route segment to the start point of the poor-network-connection road section, where the third route segment after the end point adjustment is the first route segment. In this way, when the poor-network-connection road section is located in the same route segment, the server may adjust the start point and the end point of the poor-network-connection road section, and the server may obtain the no-network-connection route segment according to this method.

With reference to the first aspect, in a possible implementation, the end point of the no-network-connection route segment is the same as the end point of the fourth route segment before the end point adjustment; or the end point of the no-network-connection route segment is a first location in the fourth route segment before the end point adjustment; or the end point of the no-network-connection route segment is a second location in the fifth route segment before the start point adjustment.

With reference to the first aspect, in a possible implementation, the server is further configured to divide the recommended route based on the preset length, to obtain a plurality of route segments, where the plurality of route segments include a sixth route segment, a seventh route segment, and an eighth route segment, an end point of the sixth route segment is a start point of the seventh route segment, and an end point of the seventh route segment is a start point of the eighth route segment; the server is specifically configured to: when the seventh route segment includes a start point of the poor-network-connection road section, and the eighth route segment includes the end point of the poor-network-connection road section, determine the end point of the no-network-connection route segment based on the end point of the poor-network-connection road section and the first length, adjust the start point of the seventh route segment to the start point of the poor-network-connection road section, and adjust the end point of the seventh route segment to the end point of the no-network-connection route segment, where the seventh route segment after the start point adjustment and the end point adjustment is the no-network-connection route segment; and the server is further configured to: adjust the end point of the sixth route segment to the start point of the poor-network-connection road section, where the sixth route segment after the end point adjustment is the first route segment, and adjust the start point of the eighth route segment to the end point of the no-network-connection route segment, where the eighth route segment after the start point adjustment is the second route segment.

With reference to the first aspect, in a possible implementation, the end point of the no-network-connection route segment is the same as the end point of the seventh route segment before the end point adjustment; or the end point of the no-network-connection route segment is a third location in the seventh route segment before the end point adjustment; or the end point of the no-network-connection route segment is a fourth location in the eighth route segment before the start point adjustment.

With reference to the first aspect, in a possible implementation, the first length is related to a moving speed of the electronic device and the preset length.

With the same preset length, a higher moving speed of the electronic device indicates a longer first length. A lower moving speed of the electronic device indicates a shorter first length.

With reference to the first aspect, in a possible implementation, the electronic device is further configured to: receive low-precision road data that is sent by the server and that is obtained through planning by using the start location of the electronic device as the start point and using the destination as the end point, where the low-precision road data is used to display a road-level navigation route; and when the electronic device moves along the recommended route to the no-network-connection route segment, and the high-precision road data of the second route segment is not obtained, display a road-level navigation route of the second route segment.

The road-level navigation route does not include a lane quantity and a lane in which the electronic device is located.

In another possible implementation, when the electronic device moves along the recommended route to the no-network-connection route segment, and the high-precision road data of the second route segment is not obtained, the electronic device may alternatively display a road-level navigation route between a start point of the second route segment and the destination.

In this way, when the high-precision road data fails to be obtained, the electronic device may obtain the low-precision road data in a timely manner, and automatically switch to the road-level navigation route based on the low-precision road data. This ensures that when the electronic device fails to obtain the high-precision road data due to poor network quality or another reason and cannot display the lane-level navigation route, the electronic device may provide a navigation service for the user by using the road-level navigation route provided based on the low-precision road data.

Optionally, after the electronic device switches to the road-level navigation route, when the electronic device moves to the second route segment, the electronic device obtains high-precision road data of the third route segment and the subsequent route segment, and the electronic device may automatically switch the road-level navigation route to the high-precision road data of the third route segment and the subsequent route segment. When the electronic device moves to the third route segment, the electronic device may continue providing the navigation service for the user by using the lane-level navigation route.

With reference to the first aspect, in a possible implementation, the electronic device is further configured to: send a real-time location of the electronic device to the server; the server is further configured to: determine a yaw location of the electronic device based on the recommended route and the real-time location of the electronic device; determine an updated recommended route by using the yaw location as the start point and using the destination as the end point; divide the updated recommended route to obtain a plurality of updated route segments, where the plurality of updated route segments include a ninth route segment and a tenth route segment; and send high-precision road data of the ninth route segment to the electronic device; and the electronic device is further configured to display a lane-level navigation route of the ninth route segment based on the high-precision road data of the ninth route segment.

In this way, when the electronic device yaws, the server may re-determine the updated recommended route, and the electronic device may perform navigation based on the updated recommended route, to provide a correct navigation route for the user. In addition, the server may also obtain the plurality of route segments based on the updated recommended route, and the electronic device may obtain high-precision road data of each route segment in the updated recommended route by segment, to ensure that when the electronic device yaws, the electronic device can still obtain high-precision road data after the yaw and high-precision road data of one or more next route segments in a timely and fast manner.

With reference to the first aspect, in a possible implementation, when the ninth route segment in the updated recommended route is not adjacent to the no-network-connection route segment, and the tenth route segment does not include the poor-network-connection road section, a distance of the ninth route segment is less than a distance of the tenth route segment. In this way, a speed of displaying the lane-level navigation route of the ninth route segment by the electronic device can be increased.

With reference to the first aspect, in a possible implementation, the lane-level navigation route includes one or more of the following information: a vehicle traveling direction, a lane quantity, a lane in which a vehicle is located, an index route, and prompt information.

According to a second aspect, this application provides a navigation method. The method includes: An electronic device receives and responds to a first user operation, and sends a start location of the electronic device and a destination entered by a user to a server; and the electronic device receives a recommended route sent by the server, and performs navigation based on the recommended route, where the recommended route is determined by the server based on the start location of the electronic device and the destination. That the electronic device performs navigation based on the recommended route specifically includes: The electronic device obtains high-precision road data of a no-network-connection route segment from the server when the electronic device moves to a first route segment in the recommended route, where the no-network-connection route segment is a next route segment adjacent to the first route segment in the recommended route, the no-network-connection route segment is determined by the server based on a poor-network-connection road section in the recommended route, and the no-network-connection route segment includes the poor-network-connection road section; the electronic device displays a lane-level navigation route of the no-network-connection route segment based on the high-precision road data of the no-network-connection route segment; the electronic device obtains high-precision road data of a second route segment from the server when the electronic device moves to the no-network-connection route segment in the recommended route, where the second route segment is a next route segment, adjacent to the no-network-connection route segment, in the recommended route; and the electronic device displays a lane-level navigation route of the second route segment based on the high-precision road data of the second route segment.

With reference to the second aspect, in a possible implementation, a distance between an end point of the no-network-connection route segment and an end point of the poor-network-connection road section is equal to a first length.

With reference to the second aspect, in a possible implementation, the recommended route further includes at least two route segments, and lengths of the at least two route segments are the same.

With reference to the second aspect, in a possible implementation, the lengths of the at least two route segments are equal to the first length.

With reference to the second aspect, in a possible implementation, the at least two route segments are route segments before the first route segment; or the at least two route segments are route segments after the second route segment; or the at least two route segments include a route segment before the first route segment and a route segment after the second route segment.

With reference to the second aspect, in a possible implementation, an end point of the first route segment is a start point of the poor-network-connection road section, and a start point of the no-network-connection route segment is the start point of the poor-network-connection road section.

With reference to the second aspect, in a possible implementation, that the electronic device obtains high-precision road data of a second route segment from the server when the electronic device moves to the no-network-connection route segment in the recommended route specifically includes: When moving between the end point of the no-network-connection route segment and the end point of the poor-network-connection road section, the electronic device sends a first message to the server, where the first message is used to obtain the high-precision road data of the second route segment.

With reference to the second aspect, in a possible implementation, before the electronic device performs navigation based on the recommended route, the method further includes: The electronic device obtains low-precision road data, where the low-precision road data is low-precision road data obtained through planning by using the start location of the electronic device as a start point and using the destination as an end point, and the low-precision road data is used to display a road-level navigation route. After the electronic device displays the lane-level navigation route of the no-network-connection route segment based on the high-precision road data of the no-network-connection route segment, the method further includes: When the electronic device moves along the recommended route to the no-network-connection route segment, and the high-precision road data of the second route segment is not obtained, the electronic device displays a road-level navigation route of the second route segment.

With reference to the second aspect, in a possible implementation, before navigation is performed based on the recommended route, the method further includes: The electronic device sends a real-time location of the electronic device to the server. After the electronic device displays the lane-level navigation route of the second route segment based on the high-precision road data of the second route segment, the method further includes: The electronic device receives an updated recommended route sent by the server, and performs navigation based on the updated recommended route, where the updated recommended route is related to a yaw location of the electronic device and the destination, and the yaw location of the electronic device is determined by the server based on the recommend route and the real-time location of the electronic device. That the electronic device performs navigation based on the updated recommended route specifically includes: The electronic device receives high-precision road data that is of a ninth route segment and that is sent by the server, and displays a lane-level navigation route of the ninth route segment based on the high-precision road data of the ninth route segment; and when the electronic device moves to the ninth route segment in the updated recommended route, the electronic device receives high-precision road data that is of a tenth route segment and that is sent by the server, and displays a lane-level navigation route of the tenth route segment based on the high-precision road data of the tenth route segment.

With reference to the second aspect, in a possible implementation, when the ninth route segment in the updated recommended route is not adjacent to the no-network-connection route segment, and the tenth route segment does not include the poor-network-connection road section, a distance of the ninth route segment is less than a distance of the tenth route segment.

With reference to the second aspect, in a possible implementation, the lane-level navigation route includes one or more of the following information: a vehicle traveling direction, a lane quantity, a lane in which a vehicle is located, an index route, and prompt information.

According to a third aspect, this application provides a navigation method. The method includes: A server receives a start location of an electronic device and a destination that are sent by the electronic device, where the start location of the electronic device and the destination are sent to the server after the electronic device receives a first user operation; the server determines a recommended route by using the start location of the electronic device as a start point and using the destination as an end point; the server determines a poor-network-connection road section included in the recommended route; the server determines a no-network-connection route segment in the recommended route, where the no-network-connection route segment includes the poor-network-connection road section; the server sends high-precision road data of the no-network-connection route segment to the electronic device when the electronic device moves to a first route segment in the recommended route, where the no-network-connection route segment is a next route segment adjacent to the first route segment in the recommended route, and the high-precision road data of the no-network-connection route segment is used by the electronic device to display a lane-level navigation route of the no-network-connection route segment; the server sends high-precision road data of a second route segment to the electronic device when the electronic device moves to the no-network-connection route segment in the recommended route, where the second route segment is a next route segment, adjacent to the no-network-connection route segment, in the recommended route, and the high-precision road data of the second route segment is used by the electronic device to display a lane-level navigation route of the second route segment.

With reference to the third aspect, in a possible implementation, a distance between an end point of the no-network-connection route segment and an end point of the poor-network-connection road section is equal to a first length.

With reference to the third aspect, in a possible implementation, the recommended route further includes at least two route segments, and lengths of the at least two route segments are the same.

With reference to the third aspect, in a possible implementation, the lengths of the at least two route segments are equal to the first length.

With reference to the third aspect, in a possible implementation, the at least two route segments are route segments before the first route segment; or the at least two route segments are route segments after the second route segment; or the at least two route segments include a route segment before the first route segment and a route segment after the second route segment.

With reference to the third aspect, in a possible implementation, an end point of the first route segment is a start point of the poor-network-connection road section, and a start point of the no-network-connection route segment is the start point of the poor-network-connection road section.

With reference to the third aspect, in a possible implementation, that the server sends high-precision road data of a second route segment to the electronic device when the electronic device moves to the no-network-connection route segment in the recommended route specifically includes: When the electronic device moves between the end point of the no-network-connection route segment and the end point of the poor-network-connection road section, the server receives a first message sent by the electronic device; and the server sends the high-precision road data of the second route segment to the electronic device in response to the first message.

With reference to the third aspect, in a possible implementation, before the server determines the no-network-connection route segment in the recommended route, the method further includes: The server divides the recommended route based on a preset length, to obtain a plurality of route segments, where the plurality of route segments include a third route segment, a fourth route segment, and a fifth route segment, an end point of the third route segment is a start point of the fourth route segment, and an end point of the fourth route segment is a start point of the fifth route segment. That the server determines a no-network-connection route segment in the recommended route specifically includes: When the fourth route segment includes the poor-network-connection road section, the server determines the end point of the no-network-connection route segment based on the end point of the poor-network-connection road section and the first length; and the server adjusts the end point of the fourth route segment to the end point of the no-network-connection route segment, where the fourth route segment after the end point adjustment is the no-network-connection route segment. After the server determines the no-network-connection route segment in the recommended route, the method further includes: The server adjusts the start point of the fifth route segment to the end point of the no-network-connection route segment, where the fifth route segment after the start point adjustment is the second route segment. The third route segment is the first route segment.

With reference to the third aspect, in a possible implementation, when the fourth route segment includes the poor-network-connection road section, the server determines the end point of the no-network-connection route segment based on the end point of the poor-network-connection road section and the first length. That the server adjusts the end point of the fourth route segment to the end point of the no-network-connection route segment, where the fourth route segment after the end point adjustment is the no-network-connection route segment specifically includes: When the fourth route segment includes the poor-network-connection road section, the server determines the end point of the no-network-connection route segment based on the end point of the poor-network-connection road section and the first length; and the server adjusts the start point of the fourth route segment to a start point of the poor-network-connection road section, and adjusts the end point of the fourth route segment to the end point of the no-network-connection route segment, where the fourth route segment after the start point adjustment and the end point adjustment is the no-network-connection route segment. After the server determines the no-network-connection route segment in the recommended route, the method further includes: The server adjusts the end point of the third route segment to the start point of the poor-network-connection road section, where the third route segment after the end point adjustment is the first route segment.

With reference to the third aspect, in a possible implementation, the end point of the no-network-connection route segment is the same as the end point of the fourth route segment before the end point adjustment; or the end point of the no-network-connection route segment is a first location in the fourth route segment before the end point adjustment; or the end point of the no-network-connection route segment is a second location in the fifth route segment before the start point adjustment.

With reference to the third aspect, in a possible implementation, before the server determines the no-network-connection route segment in the recommended route, the method further includes: The server divides the recommended route based on the preset length, to obtain a plurality of route segments, where the plurality of route segments include a sixth route segment, a seventh route segment, and an eighth route segment, an end point of the sixth route segment is a start point of the seventh route segment, and an end point of the seventh route segment is a start point of the eighth route segment. That the server determines a no-network-connection route segment in the recommended route specifically includes: When the seventh route segment includes a start point of the poor-network-connection road section, and the eighth route segment includes the end point of the poor-network-connection road section, the server determines the end point of the no-network-connection route segment based on the end point of the poor-network-connection road section and the first length; and the server adjusts the start point of the seventh route segment to the start point of the poor-network-connection road section, and adjusts the end point of the seventh route segment to the end point of the no-network-connection route segment, where the seventh route segment after the start point adjustment and the end point adjustment is the no-network-connection route segment. After the server determines the no-network-connection route segment in the recommended route, the method further includes: The server adjusts the end point of the sixth route segment to the start point of the poor-network-connection road section, where the sixth route segment after the end point adjustment is the first route segment; and the server adjusts the start point of the eighth route segment to the end point of the no-network-connection route segment, where the eighth route segment after the start point adjustment is the second route segment.

With reference to the third aspect, in a possible implementation, the end point of the no-network-connection route segment is the same as the end point of the seventh route segment before the end point adjustment; or the end point of the no-network-connection route segment is a third location in the seventh route segment before the end point adjustment; or the end point of the no-network-connection route segment is a fourth location in the eighth route segment before the start point adjustment.

With reference to the third aspect, in a possible implementation, the first length is related to a moving speed of the electronic device and the preset length.

With reference to the third aspect, in a possible implementation, before the server sends the high-precision road data of the no-network-connection route segment to the electronic device, the method further includes: The server obtains low-precision road data through planning by using the start location of the electronic device as a start point and using the destination as an end point; and the server sends the low-precision road data to the electronic device, where the low-precision road data is used by the electronic device to display a road-level navigation route of the second route segment when the high-precision road data of the second route segment is not obtained.

With reference to the third aspect, in a possible implementation, before the server sends the high-precision road data of the no-network-connection route segment to the electronic device, the method further includes: The server receives a real-time location of the electronic device sent by the electronic device. After the server sends the high-precision road data of the second route segment to the electronic device, the method further includes: The server determines a yaw location of the electronic device based on the recommended route and the real-time location of the electronic device; the server determines an updated recommended route by using the yaw location as the start point and using the destination as the end point; the server divides the updated recommended route to obtain a plurality of updated route segments, where the plurality of updated route segments include a ninth route segment and a tenth route segment; the server sends high-precision road data of the ninth route segment to the electronic device, where the high-precision road data of the ninth route segment is used by the electronic device to display a lane-level navigation route of the ninth route segment; and when the electronic device moves to the ninth route segment in the updated recommended route, the server sends high-precision road data of the tenth route segment to the electronic device, where the high-precision road data of the tenth route segment is used by the electronic device to display a lane-level navigation route of the tenth route segment.

With reference to the third aspect, in a possible implementation, when the ninth route segment in the updated recommended route is not adjacent to the no-network-connection route segment, and the tenth route segment does not include the poor-network-connection road section, a distance of the ninth route segment is less than a distance of the tenth route segment.

With reference to the third aspect, in a possible implementation, the lane-level navigation route includes one or more of the following information: a vehicle traveling direction, a lane quantity, a lane in which a vehicle is located, an index route, and prompt information.

According to a fourth aspect, this application provides an electronic device. The electronic device includes a processor and a memory. The memory is coupled to the processor, the memory is configured to store computer program code, the computer program code includes computer instructions, and the processor invokes the computer instructions to perform the navigation method provided in any possible implementation of the second aspect.

According to a fifth aspect, this application provides a server. The server includes a processor and a memory. The memory is coupled to the processor, the memory is configured to store computer program code, the computer program code includes computer instructions, and the processor invokes the computer instructions to perform the navigation method provided in any possible implementation of the third aspect.

According to a sixth aspect, this application provides a computer-readable storage medium, configured to store computer instructions. When the computer instructions are run on an electronic device, the electronic device is enabled to perform the navigation method provided in any possible implementation of the second aspect.

According to a seventh aspect, this application provides a computer-readable storage medium, configured to store computer instructions. When the computer instructions are run on a server, the server is enabled to perform the navigation method provided in any possible implementation of the third aspect.

According to an eighth aspect, this application provides a computer program product. When the computer program product runs on an electronic device, the electronic device is enabled to perform the navigation method provided in any possible implementation of the second aspect.

According to a ninth aspect, this application provides a computer program product. When the computer program product runs on a server, the server is enabled to perform the navigation method provided in any possible implementation of the third aspect.

It may be understood that, for beneficial effects of the second aspect to the ninth aspect, refer to the descriptions of the beneficial effects of the first aspect. Details are not described herein again in this application.

### BRIEF DESCRIPTION OF DRAWINGS

FIG. 1A is a diagram in which an electronic device 100 displays a lane-level navigation route based on high-precision road data;
FIG. 1B is a diagram in which an electronic device 100 displays a road-level navigation route based on low-precision road data;
FIG. 2 is a diagram of a structure of a communication system 20;
FIG. 3 is a diagram of a structure of a server 200 according to an embodiment of this application;
FIG. 4A is a diagram of a structure of an electronic device 100 according to an embodiment of this application;
FIG. 4B is a block diagram of a software structure of an electronic device 100 according to an embodiment of this application;
FIG. 5A to FIG. 5D are a group of diagrams of enabling/disabling road-level navigation;
FIG. 5E to FIG. 5G are a group of diagrams in which an electronic device 100 obtains high-precision road data, and displays a lane-level navigation route based on the high-precision road data;
FIG. 6A to FIG. 6E are diagrams in which an electronic device 100 obtains high-precision road data by segment;
FIG. 6F is a schematic flowchart of a method for displaying a lane-level navigation route by segment by an electronic device 100 when a vehicle does not yaw;
FIG. 6G to FIG. 6J are diagrams in which an electronic device 100 obtains high-precision road data by segment when a vehicle yaws;
FIG. 7 is a schematic flowchart of a method for displaying a lane-level navigation route by segment by an electronic device 100 when a vehicle yaws;
FIG. 8A to FIG. 8K are diagrams of how a server 200 adjusts a plurality of route segments in a recommended route based on a start point and an end point of a poor-network-connection road section;
FIG. 9 is a schematic flowchart of a method for obtaining a no-network-connection route segment based on a recommended route;
FIG. 10A to FIG. 10E are diagrams in which a user manually switches a lane-level navigation route to a road-level navigation route;
FIG. 10F and FIG. 10G are diagrams in which a user manually switches a road-level navigation route to a lane-level navigation route;
FIG. 10H is a diagram of a method for automatically switching between a lane-level navigation route and a road-level navigation route by an electronic device 100;
FIG. 11A and FIG. 11B are a group of diagrams in which an electronic device 100 automatically switches a lane-level navigation route and a road-level navigation route; and
FIG. 12 is a schematic flowchart of a method for a navigation system.

### DESCRIPTION OF EMBODIMENTS

The following describes the technical solutions in embodiments of this application with reference to the accompanying drawings in embodiments of this application. In descriptions of embodiments of this application, terms used in the following embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects, and indicates that there may be three relationships. For example, A and/or B may represent the following cases: Only A exists, both A and B exist, and only B exists, where A and B may be singular or plural. The character "/" generally represents an "or" relationship between the associated objects.

Reference to "an embodiment", "some embodiments", or the like described in this specification means that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment. Instead, the statements mean "one or more but not all of the embodiments", unless otherwise specifically emphasized in another manner. The terms "include", "contain", "have", and their variants all mean "include but are not limited to", unless otherwise specifically emphasized. The term "connection" includes a direct connection and an indirect connection, unless otherwise specified. "First" and "second" are merely intended for description, and shall not be understood as an indication or implication of relative importance or implicit indication of a quantity of indicated technical features.

In embodiments of this application, words such as "example" or "for example" indicate giving an example, an illustration, or a description. Any embodiment or design scheme described as an "example" or "for example" in embodiments of this application should not be construed as being more preferred or more advantageous than another embodiment or design scheme. Exactly, use of the word "example", "for example", or the like is intended to present a related concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as content that can be recognized by the user. The user interface is usually in a representation form of a graphical user interface (graphical user interface, GUI), which refers to a user interface related to a computer operation and displayed in a graphical manner. The user interface may be a visual interface element like a text, an icon, a button, a menu, a tab, a text box, a dialog box, a status bar, a navigation bar, or a widget that is displayed on a display of the electronic device.

To improve precision of a navigation route, this application provides a high-precision navigation method, namely, lane-level navigation. An application used to provide a navigation function, for example, a map application, may be installed in an electronic device. Based on the map application, an electronic device 100 may obtain high-precision road data, and display a lane-level navigation route based on the high-precision road data.

The lane-level navigation may be a navigation method in which a lane-level guidance navigation route is planned with reference to high-precision road data and high-precision positioning of a vehicle. The lane-level navigation may include: recommending an optimal traveling lane, guiding a user to change a lane in advance, displaying a traveling direction and a speed limit of a specific lane, and the like. The user can learn, based on the lane-level navigation, lane division of a current road and a specific lane on which the vehicle of the user currently travels. The lane-level navigation can restore a real road scenario with high precision in a navigation process, provide lane-level driving action guidance for the user, reduce difficulty of the user in understanding navigation, and improve driving safety and driving experience.

The high-precision road data may include but is not limited to data such as a lane quantity of each road, a lane width, a lane traffic direction, a road sign in a lane, a lane connection relationship, and a lane index.

The high-precision positioning of the vehicle may be implemented by using a global positioning system (global positioning system, GPS), an ultra-wideband (ultra-wideband, UWB) positioning technology, or the like. The high-precision positioning of the vehicle can precisely position the vehicle to a lane, that is, obtain a lane-level location of the vehicle. The high-precision positioning may be submeter-level positioning (that is, an error range of positioning is within 1 meter). A vehicle positioning method is not limited in embodiments of this application.

In other words, the lane-level navigation route may reflect the location of the vehicle and the lane on which the vehicle is located.

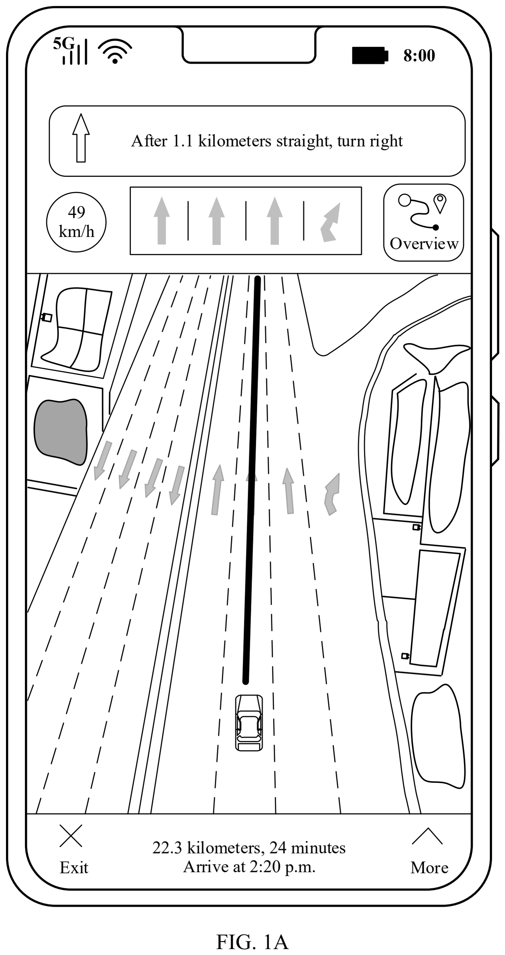

FIG. 1A is a diagram in which the electronic device 100 displays a lane-level navigation route based on high-precision road data.

As shown in FIG. 1A, information such as a lane quantity of each road, a lane width, a traffic direction of a vehicle, a road sign in a lane, a lane connection relationship, a lane on which the vehicle is located, and a lane index may be displayed in the lane-level navigation route in a high-definition manner.

For example, each road shown in FIG. 1A has four lanes, and the lanes are sequentially a first lane, a second lane, a third lane, and a fourth lane from left to right in a vehicle traveling direction. A lane mark is further shown on each lane. Lane marks of the first lane, the second lane, and the third lane are all straight-through signs, and a lane mark of the fourth lane is a right-turn sign. The vehicle is located on the second lane. The lane index includes an index line of traveling along the second lane.

In this embodiment of this application, the electronic device 100 may receive a destination entered by a user in a map application, and obtain high-precision road data between a start location of the electronic device 100 and the destination entered by the user. The electronic device 100 may display a lane-level navigation route based on the high-precision road data. As shown in FIG. 1A, a real road scenario may be restored by using the lane-level navigation route, to provide lane-level driving action guidance for the user, and improve driving safety and driving experience.

In some embodiments, a distance between the start location of the electronic device 100 and the destination is long, a data amount of the high-precision road data between the start location of the electronic device 100 and the destination is large, and a download time is long. To enable the electronic device 100 to quickly display the lane-level navigation route, the electronic device 100 may download the high-precision road data by segment, and display the lane-level navigation route by segment. In this way, the electronic device 100 can quickly display the lane-level navigation route.

In some embodiments, before the electronic device 100 downloads the high-precision road data by segment, a server needs to obtain a recommended route based on the distance between the start location of the electronic device 100 and the destination entered by the user, divide the recommended route to obtain a plurality of route segments, and separately obtain high-precision road data corresponding to each route segment. When the plurality of route segments include a poor-network-connection road section, the electronic device 100 may adjust the plurality of route segments, so that the poor-network-connection road section is in one route segment (which may be referred to as a no-network-connection route segment), and a distance between an end point of the no-network-connection route segment and an end point of the poor-network-connection road section is greater than or equal to a first length. In this way, when the vehicle travels to a route whose distance is the first length in the no-network-connection route segment, the electronic device 100 may download high-precision road data of one or more subsequent route segments, and display a lane-level navigation route of the one or more subsequent route segments.

In some embodiments, when a network of the electronic device 100 is not good, the electronic device 100 cannot download the high-precision road data. As a result, the electronic device 100 cannot display the lane-level navigation route. To avoid this case, the electronic device 100 may switch to displaying a road-level navigation route based on road data of a common map. When a network status of the electronic device 100 is good and the high-precision road data can be obtained, the electronic device 100 switches to displaying the lane-level navigation route again. In this way, when the electronic device 100 cannot display the lane-level navigation route, the electronic device 100 may further provide a navigation service for the user by using the road-level navigation route.

Road-level navigation may be a navigation method in which a road-level guidance navigation route is planned with reference to low-precision road data and vehicle positioning. The road-level navigation may include: recommending an optimal traveling route, displaying a traveling direction and a speed limit of a vehicle, and the like. However, precision of the road-level navigation is lower than precision of the lane-level navigation. The road-level navigation cannot display a lane quantity of a road on which the vehicle currently travels, and cannot display the lane on which the vehicle is located.

The low-precision road data may include but is not limited to data such as a lane traveling direction and a road index.

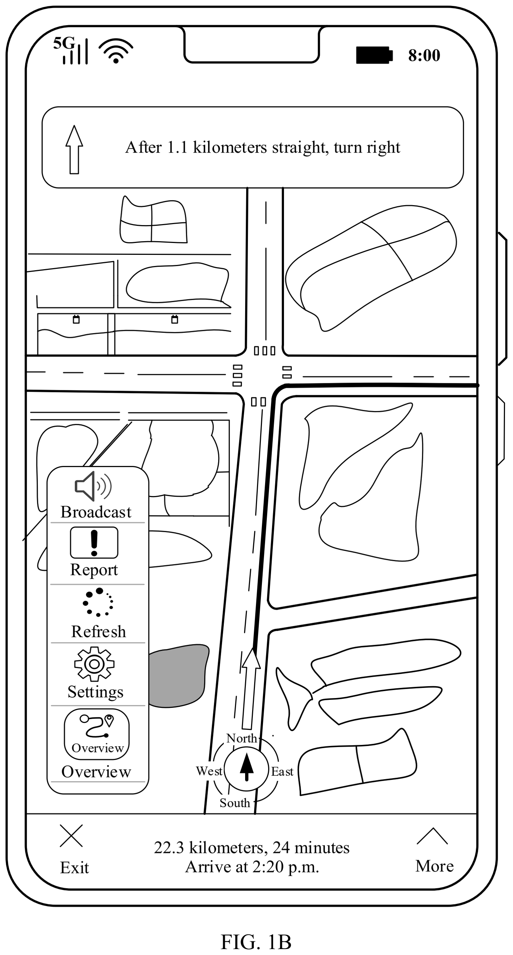

FIG. 1B is a diagram in which the electronic device 100 displays a road-level navigation route based on low-precision road data.

For example, in FIG. 1B, only a vehicle driving direction and a road index may be displayed in the road-level navigation route. The road index may be an index line for traveling along a route between the start location of the electronic device 100 and the destination.

**The following describes a communication system provided in an embodiment of this application.**

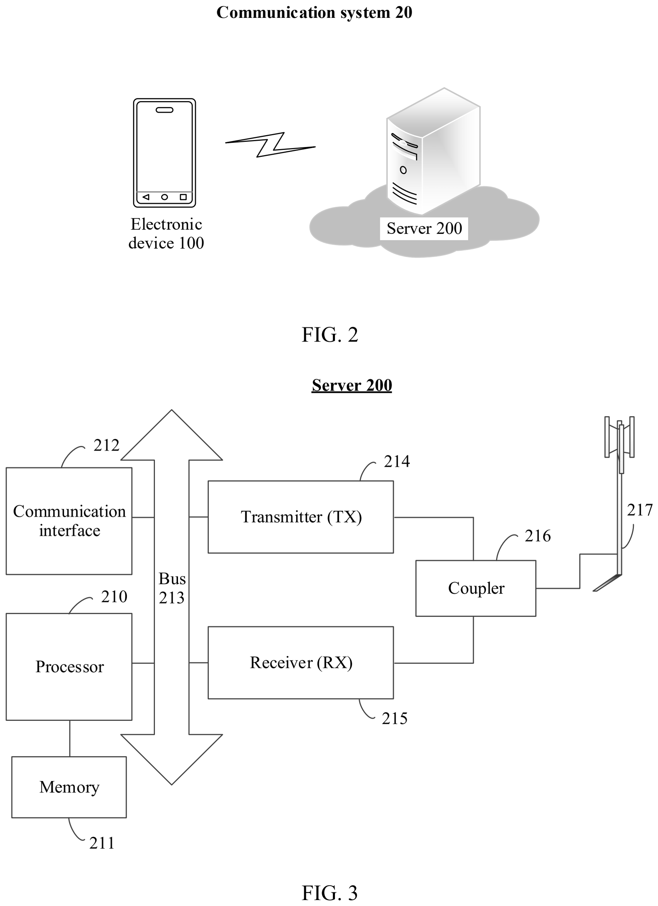

FIG. 2 is an example diagram of a structure of a communication system 20.

As shown in FIG. 2, the communication system 20 may include a server 200 and an electronic device 100. Communication connections may be established between a plurality of electronic devices and the server 200.

The server 200 may be configured to provide a cloud service of a map application. For example, the server 200 may provide a navigation service for the electronic device in the communication system 20 through a network request service interface. The map application may be an application used to provide a group navigation function. This is not limited to the map application, and the application used to provide the navigation function may be another application. In subsequent embodiments of this application, the map application is specifically used as an example for description.

The server 200 may include a navigation service module.

The navigation service module may be configured to interact with the electronic device 100 in the communication system 20, to provide, for a user, a function of planning navigation routes for travel manners such as walking, bus, driving, or taxi. The navigation service module may include capabilities such as lane-level navigation and real-time location update.

The map application may be installed in the electronic device 100, and the electronic device may be used as a human-machine interaction device for the user to use the map application. The user may use, by performing an operation (for example, a tap operation, a touch operation, a button operation, a voice operation, or a gesture operation) on the electronic device 100, the navigation function provided by the map application.

The electronic device 100 may be a mobile phone, a tablet computer, a vehicle-mounted computer, a wearable device (for example, a smartwatch, a smart band, or smart glasses), an ultra-mobile personal computer (ultra-mobile personal computer, UMPC), a netbook, a personal digital assistant (personal digital assistant, PDA), or the like. A specific type of the electronic device 100 is not limited in embodiments of this application.

The electronic device 100 may include a positioning module and a communication module.

The positioning module may be configured to determine a location of the electronic device 100 with reference to technologies such as a hardware apparatus (for example, a GPS) in the electronic device 100 and a positioning algorithm. The location of the electronic device 100 may be used by the map application to implement a function of displaying a real-time location of the user and a function of real-time navigation. In a scenario in which the vehicle is driven and the electronic device 100 is used for navigation, a location determined by the electronic device 100 by using the positioning module may represent a location of the vehicle. In some embodiments, the positioning module may be a submeter-level high-precision positioning module, and may implement submeter-level positioning. Based on the submeter-level positioning, the map application in the electronic device 100 may provide a lane-level navigation function.

The communication module may be used by the electronic device 100 to transmit data in a wired communication or wireless communication manner, to implement a function of communicating with the server 200. For example, the electronic device 100 may send location information of the electronic device 100 to the server 200 in real time by using the communication module, and receive high-precision road data or low-precision road data from the server 200 by using the communication module.

In addition to the server 200 and the electronic device 100 shown in FIG. 2. The communication system 20 may further include more or fewer devices.

The following describes the server 200 provided in embodiments of this application.

**FIG. 3** **is an example diagram of a structure of the server 200 according to an embodiment of this application.**

As shown in FIG. 3, the server 200 may include one or more processors 210, a memory 211, a communication interface 212, a transmitter 214, a receiver 215, a coupler 216, and an antenna 217. These components may be connected through a bus 213 or in another manner. FIG. 2 is described by using a bus connection as an example.

The communication interface 212 may be used by the server 200 to communicate with another electronic device, for example, the electronic device 100 shown in FIG. 2. Specifically, the communication interface 212 may be a 3G communication interface, a long term evolution (LTE) (4G) communication interface, a 5G communication interface, a WLAN communication interface, a WAN communication interface, or the like. In addition to a wireless communication interface, the server 200 may alternatively be configured with a wired communication interface 212 to support wired communication.

In some embodiments of this application, the transmitter 214 and the receiver 215 may be considered as one wireless modem. The transmitter 214 may be configured to perform transmission processing on a signal output by the processor 210. The receiver 215 may be configured to receive a signal. In the server 200, there may be one or more transmitters 214 and receivers 215. The antenna 217 may be configured to convert electromagnetic energy in a transmission line into an electromagnetic wave in free space, or convert an electromagnetic wave in free space into electromagnetic energy in a transmission line. The coupler 216 may be configured to divide a mobile communication signal into a plurality of signals, and allocate the plurality of signals to a plurality of receivers 215. It may be understood that the antenna 217 of the server 200 may be implemented as a large-scale antenna array.

The memory 211 is coupled to the processor 210, and is configured to store various software programs and/or a plurality of groups of instructions. Specifically, the memory 211 may include a high-speed random access memory, and may also include a non-volatile memory, for example, one or more disk storage devices, flash memory devices, or other non-volatile solid-state storage devices.

The memory 211 may store an operating system (briefly referred to as a system below), for example, an embedded operating system like uCOS^{®}, VxWorks^{®}, or RTLinux^{®}. The memory 211 may further store a network communication program, and the network communication program may be used to communicate with the electronic device 100.

In this embodiment of this application, the memory 211 may store high-precision road data and the like.

In this embodiment of this application, the processor 210 may be configured to read and execute computer-readable instructions. Specifically, the processor 210 may be configured to invoke a program stored in the memory 211, and execute instructions included in the program. The program may be, for example, an implementation program of the navigation method provided in one or more embodiments of this application on a side of the server 200.

It should be noted that the server 200 shown in FIG. 3 is merely an implementation in embodiments of this application. During actual application, the server 200 may alternatively include more or fewer components. This is not limited herein.

The following uses the electronic device 100 as an example to describe a structure of the electronic device in the communication system 20 shown in FIG. 2.

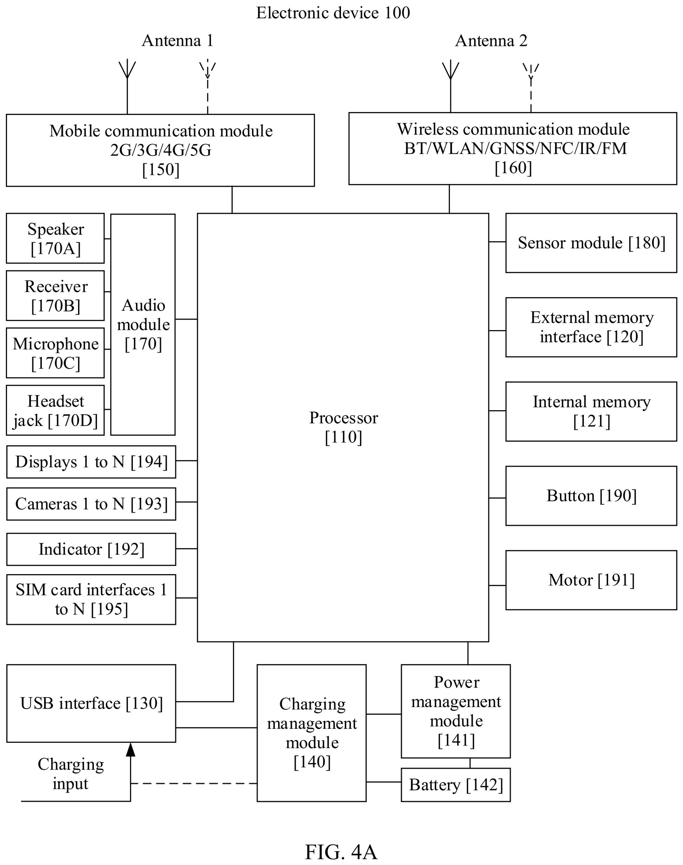

**FIG. 4A** **is an example diagram of a structure of the electronic device 100 according to an embodiment of this application.**

As shown in FIG. 4A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some examples, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be connected to the charger to charge the electronic device 100, or may be configured to transmit data between the electronic device 100 and a peripheral device, or may be connected to a headset for playing audio through the headset.

The charging management module 140 is configured to receive a charging input from the charger. The charger may be a wireless charger or a wired charger. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 implements a display function through the GPU, the display 194, the application processor, and the like. The GPU is a microprocessor for image processing, and connects the display 194 to the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, a ray of light is transmitted to a light-sensitive element of a camera through a lens, and an optical signal is converted into an electrical signal. The light-sensitive element of the camera transmits the electrical signal to the ISP for processing, and converts the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy, or the like.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data, a phone book, and the like) created in a process of using the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or some functional modules in the audio module 170 are disposed in the processor 110. The speaker 170A, also referred to as a "loudspeaker", is configured to convert an electrical audio signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as calling and data communication. In some examples, the electronic device 100 uses an eSIM, namely, an embedded SIM card. The eSIM card may be embedded into the electronic device 100, and cannot be separated from the electronic device 100.

The electronic device 100 may be an electronic device carrying iOS^{®}, Android^{®}, Windows^{®}, a Harmony^{®} OS (Harmony^{®} OS), or another operating system, for example, a mobile phone, a tablet computer, a notebook computer, a smart watch, or a smart band. A specific type of the electronic device 100 is not limited in embodiments of this application.

A software system of the electronic device 100 may use a layered architecture, an event-driven architecture, a microkernel architecture, a microservice architecture, or a cloud architecture. In this embodiment of this application, an Android^{®} system with a layered architecture is used as an example to illustrate a software structure of the electronic device 100.

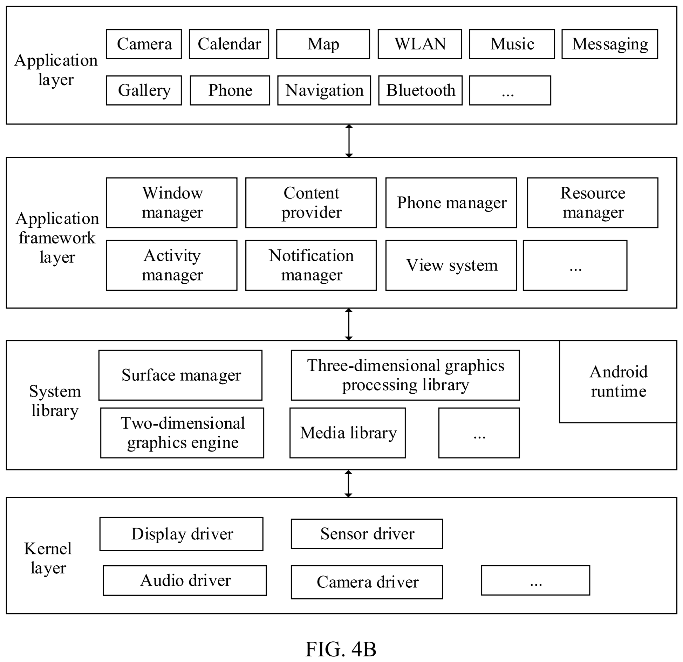

**FIG. 4B** **is a block diagram of the software structure of the electronic device 100 according to an embodiment of this application.**

In the layered architecture, software is divided into several layers, and each layer has a clear role and task. The layers communicate with each other through a software interface. In some embodiments, the Android^{®} system is divided into four layers: an application layer, an application framework layer, an Android runtime (Android Runtime) and system library, and a kernel layer from top to bottom.

The application layer may include a series of application packages.

As shown in FIG. 4B, the application packages may include applications such as Camera, Gallery, Calendar, Phone, Map, Navigation, WLAN, Bluetooth, Music, and Messaging. The map application may be used to provide a navigation function.

The application framework layer provides an API and a programming framework for an application at the application layer. The application framework layer includes some predefined functions.

As shown in FIG. 4B, the application framework layer may include a window manager, a content provider, a view system, a phone manager, a resource manager, a notification manager, an activity manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, a phone book, and the like.

The view system includes visual controls such as a control for displaying a text and a control for displaying a picture. The view system may be configured to construct an application. A display interface may include one or more views. For example, a display interface including a notification icon of Messaging may include a text display view and a picture display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in the status bar (for example, a pull-down notification bar), and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an alert tone is made, the electronic device vibrates, or an indicator blinks.

The activity manager is responsible for managing an activity (activity), and is responsible for starting, switching, and scheduling each component in the system, and managing and scheduling an application. The activity manager can be invoked by an upper-layer application to start a corresponding activity.

The Android runtime includes a kernel library and a virtual machine. The Android runtime is responsible for scheduling and management of the Android system.

The kernel library includes two parts: a function that needs to be invoked by a Java language and a kernel library of Android.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a vehicle navigation scenario provided in an embodiment of this application.

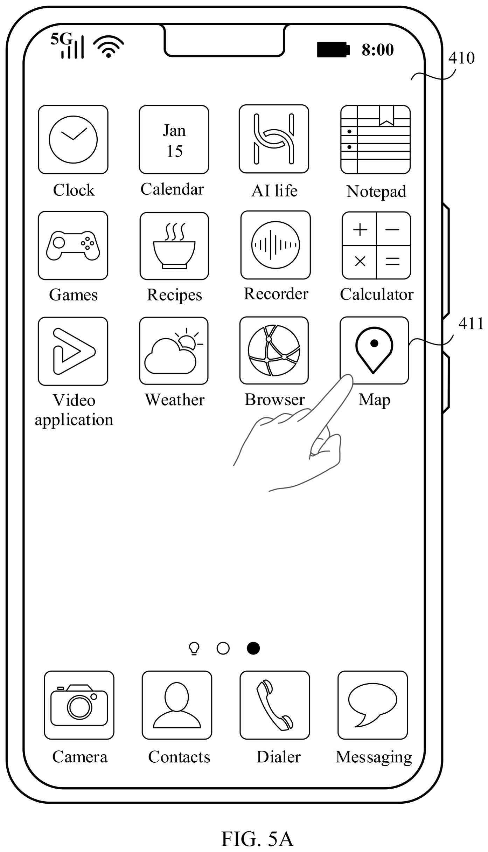

### Enabling/Disabling road-level navigation (FIG. 5A to FIG. 5D)

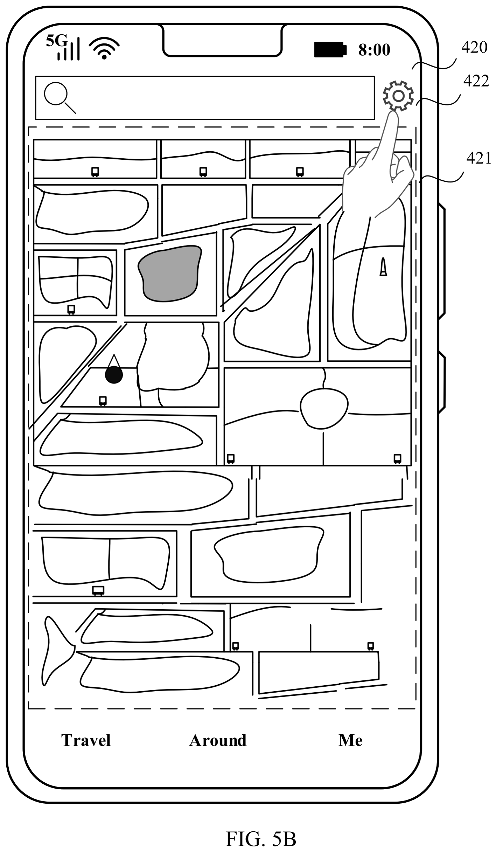

As shown in FIG. 5A, an electronic device 100 may display a user interface 410. The user interface 410 may include icons of one or more applications, for example, an icon 411 of a map application. An icon of an application may be used by a user to open the corresponding application. In response to an operation on the icon 411 of the map application, for example, a touch operation, the electronic device 100 may display a user interface 420 shown in FIG. 5B. The user interface 420 may be a user interface of the map application, and may be referred to as a map interface.

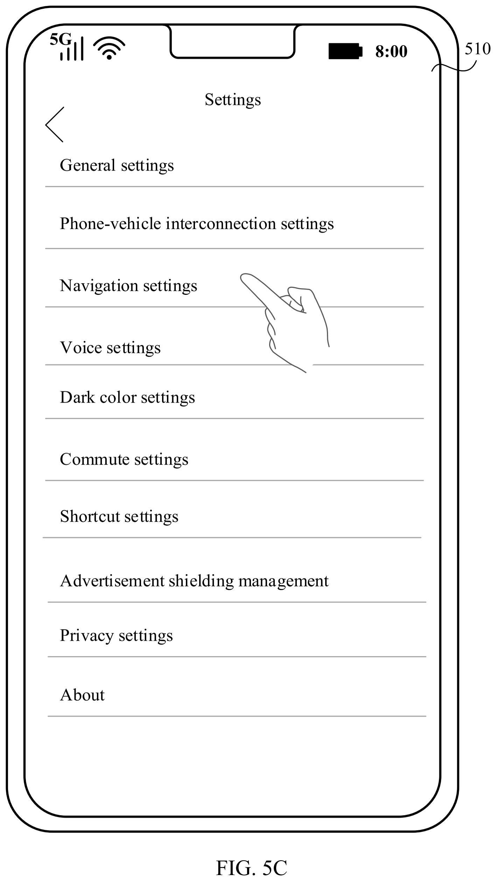

As shown in FIG. 5B, the user interface 420 may include a map display area 421 and a setting control 422. Map information may be displayed in the map display area 421, so that the user can view a location of each area. In response to an operation on the setting control 422, the electronic device 100 may display a user interface 510 shown in FIG. 5C.

As shown in FIG. 5C, the user interface 510 may include a plurality of function setting items. The plurality of setting items may include a general setting item, a phone-vehicle interconnection setting item, a navigation setting item, a voice setting item, a dark color setting item, a commute setting item, a shortcut setting item, an advertisement shielding setting item, a privacy setting item, and the like.

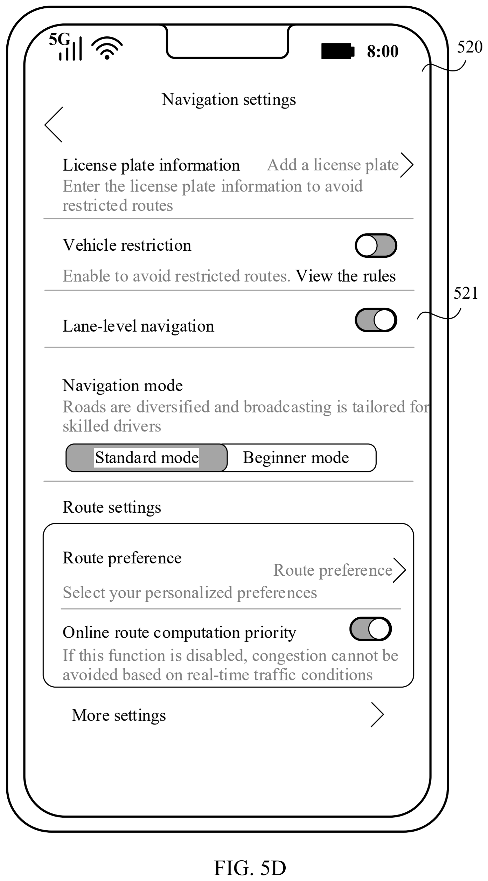

As shown in FIG. 5C, the electronic device 100 may receive an input operation (for example, a tap) of the user on the navigation setting item, and in response to the input operation of the user, the electronic device 100 may display a user interface 520 shown in FIG. 5D. The user interface 520 is a navigation-device interface. The user interface 520 shows a plurality of navigation setting items. The plurality of navigation setting items may include a license plate information setting item, a vehicle restriction setting item, a lane-level navigation setting item, a navigation mode setting item, a route preference setting item, and an online route computation priority setting item.

The license plate information setting item may receive a user operation to fill in license plate information, and navigation information may prompt the user to avoid a route on which a license plate filled in by the user is restricted.

A vehicle restriction function is disabled. The navigation information may prompt the vehicle to avoid a restricted route (for example, a restricted route based on a time period) only after the vehicle restriction function is enabled. The vehicle restriction setting item may be enabled by a received user operation.

A lane-level navigation function is enabled. Optionally, after the user starts the map application, the lane-level navigation function may be automatically enabled. After the lane-level navigation function is enabled, the map application may download high-precision road data from a server, and display a lane-level navigation route based on the high-precision road data. The lane-level navigation setting item 521 may also receive a user operation to disable the lane-level navigation function.

Optionally, after the lane-level navigation function is disabled, the electronic device 100 closes the map application. After the electronic device 100 receives a user operation again to start the map application, in a possible implementation, the electronic device 100 may automatically enable the lane-level navigation function again. As long as the map application is started, the electronic device 100 may automatically enable the lane-level navigation function to reduce a user operation, and the user needs to manually disable the lane-level navigation function. In another possible implementation, the lane-level navigation function is disabled, and the user needs to manually enable the lane-level navigation function. In other words, the user needs to manually enable/disable the lane-level navigation function.

The navigation mode setting item may receive a user operation to select a different navigation mode, for example, a standard mode or a beginner mode.

The route preference setting item may receive a user operation to select a route preferred by the user, for example, a high-altitude route or a passage route.

If an online route computation priority function is enabled, the online route computation priority setting item can receive a user operation to disable the online route computation priority function. After the online route computation priority function is enabled, the map application can avoid congestion based on a real-time traffic condition.

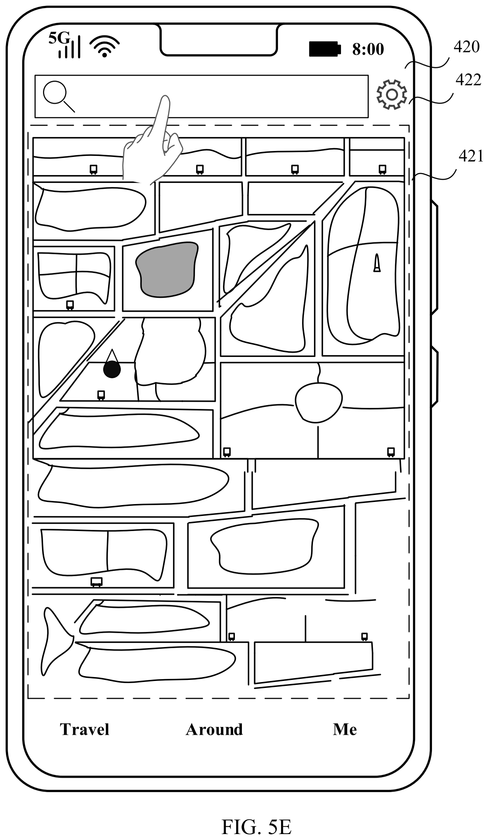

**The electronic device 100 obtains high-precision road data, and displays a lane-level navigation route based on the high-precision road data (****FIG. 5E to FIG. 5G****).**

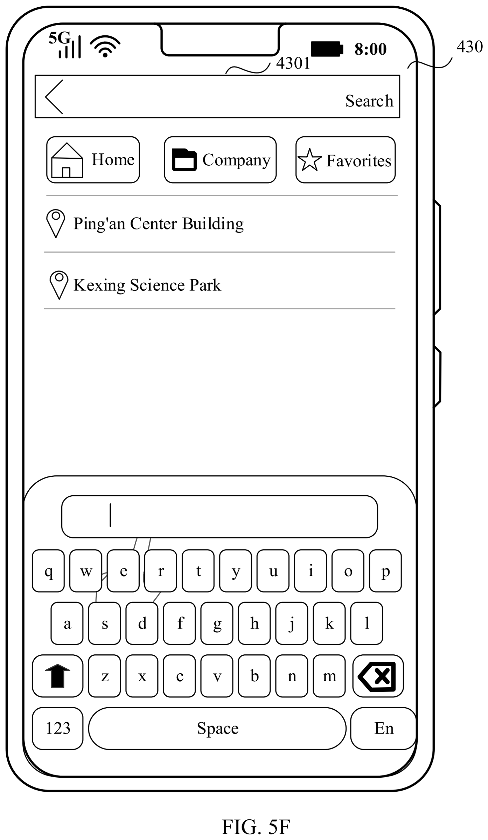

As shown in FIG. 5E, the electronic device 100 may receive an input operation (for example, a tap) of the user on a search bar on the user interface 420, and in response to the input operation of the user, the electronic device 100 may display a user interface 430 shown in FIG. 5F. The user may enter a destination on the user interface 430.

As shown in FIG. 5F, the user interface 430 shows an input bar 4301, a keyboard, and a history record. The history record may be destinations previously entered by the user in the input bar 4301, for example, a destination Ping'an Center Building and a destination Kexing Science Park. The user may enter, in the input bar 4301 through the keyboard, a destination to which the user is to go.

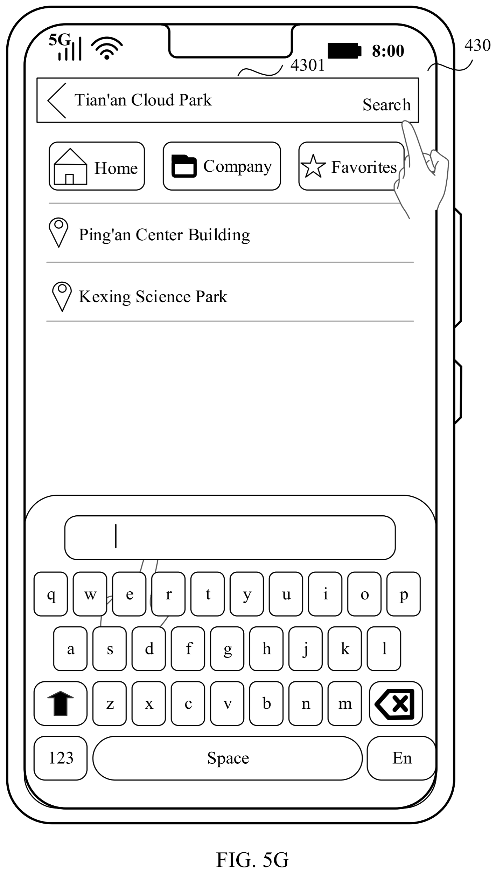

As shown in FIG. 5G, after the user enters a destination "Tian'an Cloud Park" in the input bar 4301 through the keyboard, the electronic device 100 may receive an input operation (for example, a tap) of the user on the search control on the user interface 430, and in response to the input operation of the user, the electronic device 100 may obtain a real-time location of the electronic device 100, and send the real-time location of the electronic device 100 and the destination entered by the user to a server 200. The server 200 may obtain high-precision road data through planning by using the start location as a start point and using the destination entered by the user as an end point, and then send the high-precision road data to the electronic device 100. The electronic device 100 may display a lane-level navigation route based on the high-precision road data.

For example, the lane-level navigation route may be the navigation route shown in FIG. 1A. For details, refer to the descriptions in FIG. 1A. Details are not described herein again in this application.

**In some embodiments, a distance between the start location and the destination is long, and a data amount of the high-precision road data between the start location and the destination is large. To enable the electronic device 100 to quickly display the lane-level navigation route, the electronic device 100 may download the high-precision road data by segment, and display the lane-level navigation route by segment. In this way, the electronic device 100 can quickly display the lane-level navigation route.**

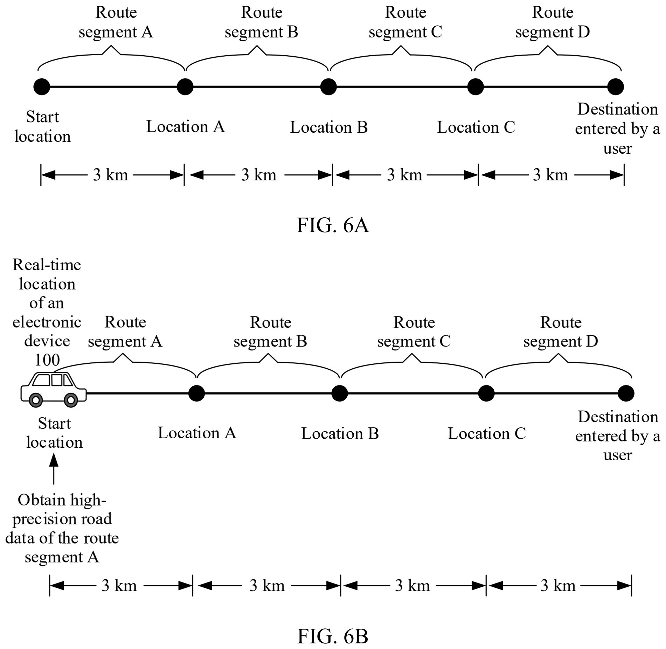

**FIG. 6A to FIG. 6E** **are diagrams in which the electronic device 100 obtains the high-precision road data by segment.**

The electronic device 100 may receive a user operation to start the map application, and the destination is entered in the map application. The electronic device 100 may obtain the real-time location of the electronic device 100, use the real-time location of the electronic device 100 in this case as the start location of the vehicle, and send the start location and the destination entered by the user to the server 200.

The server 200 may obtain a recommended route through planning based on the start location of the electronic device 100 and the destination entered by the user that are sent by the electronic device. Route information of the recommended route may include but is not limited to the following information: the start location (the start location of the electronic device 100), the end point (the destination entered by the user), names of a plurality of roads that are passed through, a total distance, and the like.

The server 200 may divide the recommended route to obtain a plurality of route segments. In this way, the server 200 may obtain the high-precision road data by segment, and then send the high-precision road data obtained by segment to the electronic device 100. In this way, the electronic device 100 may obtain the high-precision road data by segment, and display the lane-level navigation route by segment based on the segment-based high-precision road data.

For example, as shown in FIG. 6A, the server 200 may divide the recommended route at an interval of a preset distance (for example, 3 km) to obtain route segments. For example, the total distance of the recommended route is 12 km, and the plurality of route segments obtained by the server 200 may be a route segment A, a route segment B, a route segment C, and a route segment D.

A start point of the route segment A is the start location, and an end point of the route segment A is a location A. A start point of the route segment B is the location A, and an end point of the route segment B is a location B. A start point of the route segment C is the location B, and an end point of the route segment C is a location C. A start point of the route segment D is the location C, and an end point of the route segment D is the destination entered by the user. Route lengths of the route segment A, the route segment B, the route segment C, and the route segment D are all 3 km.

In some embodiments, distances of the route segments may be all the same, or distances of the route segments may be different, or may be partially the same, or may be all different. This is not limited in this application either.

It should be noted that 3 km is merely used to explain this application, and should not constitute a limitation.

As shown in FIG. 6B, the server 200 may first obtain high-precision road data of the route segment A, and sends the high-precision road data of the route segment A to the electronic device 100. After obtaining the high-precision road data of the route segment A, the electronic device 100 may display a lane-level navigation route of the route segment A based on the high-precision road data of the route segment A. In this way, the electronic device 100 can quickly obtain a part of the high-precision road data and display a part of the lane-level navigation route.

Optionally, the server 200 may further send route information of the route segment A to the electronic device 100, so that the electronic device 100 may determine when to obtain high-precision road data of a next route segment from the server 200. The route information of the route segment A includes but is not limited to one or more of the following: the start location of the route segment A, the end point (the location A) of the route segment A, names of one or more roads that the route segment A passes through, a total distance of the route segment A, and the like.

Optionally, the server 200 may further send the route information of the route segment A to the electronic device 100. The electronic device 100 may further determine, based on the real-time location of the electronic device 100 and the route information of the route segment A, whether the vehicle yaws. When determining that the vehicle yaws, the electronic device 100 may send a message to the server 200, so that the server 200 may obtain an updated recommended route through re-planning based on the real-time location of the electronic device 100. When determining that the vehicle does not yaw, the electronic device 100 may not send a message to the server 200, and the electronic device 100 may continue traveling toward the destination based on the current recommended route.

Optionally, the electronic device 100 may alternatively send the real-time location of the electronic device 100 to the server 200. The server 200 may determine, based on the real-time location of the electronic device 100 and the route information of the route segment A, whether the vehicle yaws. When determining that the vehicle yaws, the server 200 may obtain an updated recommended route through planning based on the real-time location of the electronic device 100, and send a notification to the electronic device 100. The electronic device 100 may prompt the user that the vehicle currently yaws and use the updated recommended route. When determining that the vehicle does not yaw, the server 200 may not send a message to the electronic device 100, and the electronic device 100 may continue traveling toward the destination based on the current recommended route.

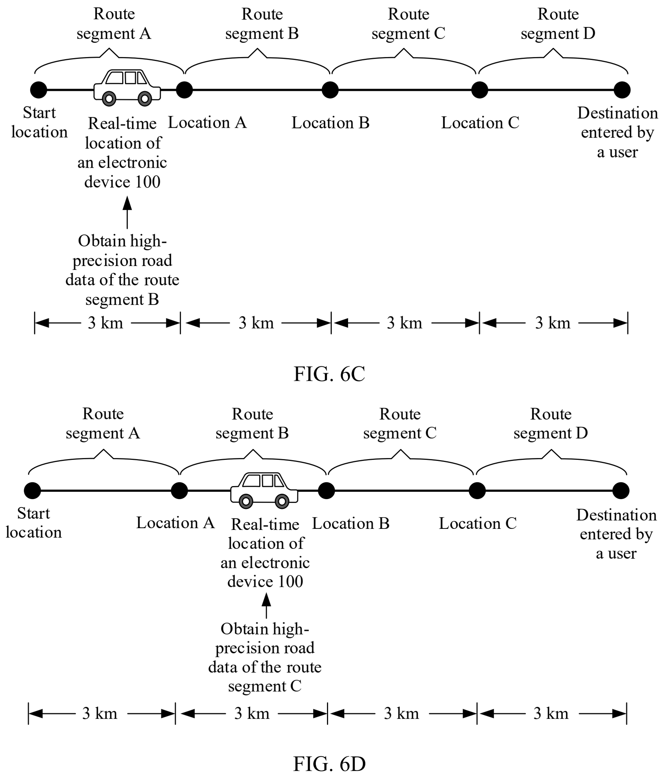

**FIG. 6C to FIG. 6E** **are diagrams in which the electronic device 100 obtains the high-precision road data by segment when the vehicle does not yaw.**

When the vehicle travels on the route segment A, in a possible implementation, after the electronic device 100 moves to the route segment B, the electronic device 100 may send a message to the server 200, where the message is used to obtain high-precision road data of one or more subsequent route segments. In another possible implementation, when the electronic device 100 moves to the route segment B, the electronic device 100 may determine a distance between the real-time location of the electronic device 100 and the location A based on the real-time location of the electronic device 100 and the location A. When the distance between the real-time location of the electronic device 100 and the location A is less than or equal to a preset distance (for example, 1.5 km), an example in which the electronic device 100 obtains high-precision road data of a subsequent route segment is used for description in this application.

It should be noted that the preset distance is not limited to 1.5 km, and may alternatively be another value. This is not limited in this application.

As shown in FIG. 6C, the vehicle travels on the route segment A. When the vehicle travels to a location that is 1.5 km away from the location A, the electronic device 100 may send a message to the server 200, where the message is used to obtain high-precision road data of a subsequent route segment.

In response to the message, the server 200 may obtain high-precision road data of the route segment B, and send the high-precision road data of the route segment B to the electronic device 100. The electronic device 100 may obtain the high-precision road data of the route segment B. When the vehicle travels to the route segment B, the electronic device 100 may display a lane-level navigation route of the route segment B based on the high-precision road data of the route segment B.

Similarly, when the vehicle travels on the route segment B, the electronic device 100 may determine a distance between the real-time location of the electronic device 100 and the location B based on the real-time location of the electronic device 100 and the location B. When the distance between the real-time location of the electronic device 100 and the location B is less than or equal to the preset distance (for example, 1.5 km), the electronic device 100 may send a message to the server 200, where the message is used to obtain high-precision road data of one or more subsequent route segments. An example in which the electronic device 100 obtains high-precision road data of a subsequent route segment is used for description in this application.

As shown in FIG. 6D, the vehicle travels on the route segment B. When the vehicle travels to a location that is 1.5 km away from the location B, the electronic device 100 may send a message to the server 200, where the message is used to obtain high-precision road data of a subsequent route segment.

In response to the message, the server 200 may obtain high-precision road data of the route segment C, and send the high-precision road data of the route segment C to the electronic device 100. The electronic device 100 may obtain the high-precision road data of the route segment C. When the vehicle travels to the route segment C, the electronic device 100 may display a lane-level navigation route of the route segment C based on the high-precision road data of the route segment C.

Similarly, when the vehicle travels on the route segment C, the electronic device 100 may determine, based on the real-time location of the electronic device 100 and the destination entered by the user, a distance between the real-time location of the electronic device 100 and the destination entered by the user. When the distance between the real-time location of the electronic device 100 and the destination entered by the user is less than or equal to the preset distance (for example, 1.5 km), the electronic device 100 may send a message to the server 200, where the message is used to obtain high-precision road data of one or more subsequent route segments. An example in which the electronic device 100 obtains high-precision road data of a subsequent route segment is used for description in this application.

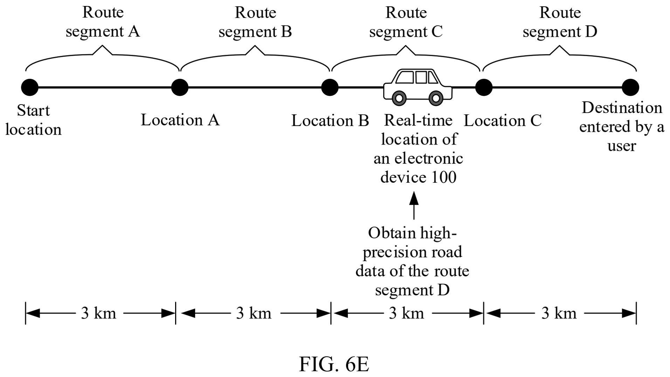

As shown in FIG. 6E, the vehicle travels on the route segment C. When the vehicle travels to a location that is 1.5 km away from the destination entered by the user, the electronic device 100 may send a message to the server 200, where the message is used to obtain high-precision road data of a subsequent route segment.

In response to the message, the server 200 may obtain high-precision road data of the route segment D, and send the high-precision road data of the route segment D to the electronic device 100. The electronic device 100 may obtain the high-precision road data of the route segment D. When the vehicle travels to the route segment D, the electronic device 100 may display a lane-level navigation route of the route segment D based on the high-precision road data of the route segment D.

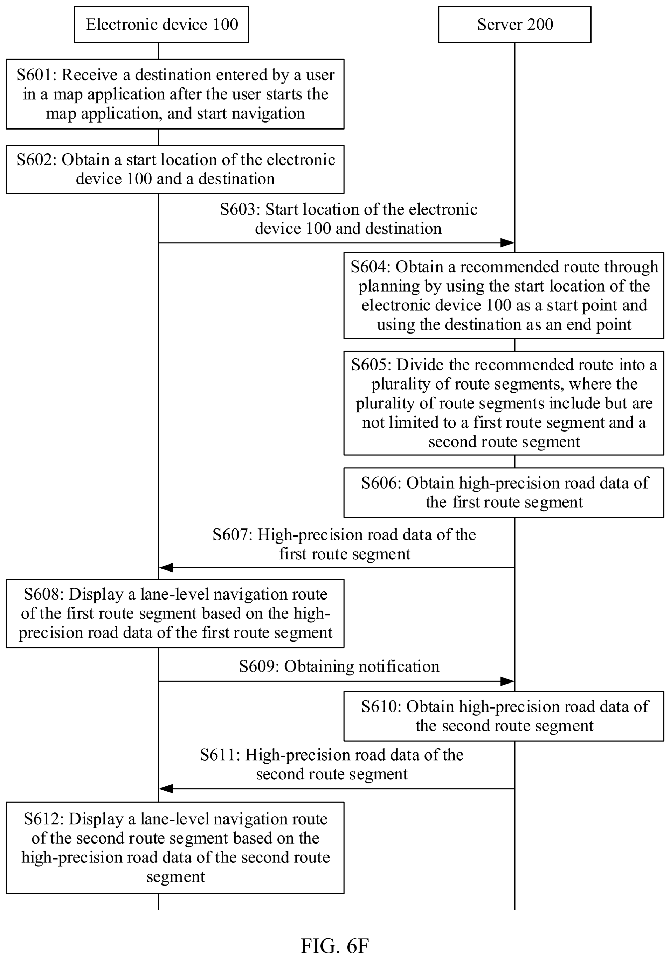

**FIG. 6F** **is a schematic flowchart of a method for displaying a lane-level navigation route by segment by the electronic device 100 when the vehicle does not yaw.**

S601: The electronic device 100 receives a destination entered by the user in a map application after the user starts the map application, and starts navigation.

The map application may be the map application shown in FIG. 5A.

The destination entered by the user in the map application may be the destination "Tian'an Cloud Park" shown in FIG. 5G. After the electronic device 100 receives an input operation (for example, a tap) of the user on the search control on the user interface 430, the electronic device 100 starts navigation.

S602: Obtain a start location of the electronic device 100 and a destination.

The start location of the electronic device 100 may be a real-time location of the electronic device 100 obtained when the electronic device 100 starts navigation. The location may be determined based on submeter-level positioning. A lane-level location of the vehicle may be determined based on the location.

The destination may be entered by the user in S601.

Optionally, the start location of the electronic device 100 may alternatively be obtained by the electronic device 100 based on the real-time location of the electronic device 100 after the user starts the map application, and is not limited to the start location of the electronic device 100 obtained in S602.

S603: The electronic device 100 sends the start location of the electronic device 100 and the destination to the server 200.

In response to the input operation of the user on the search control on the user interface 430, the electronic device 100 obtains the start location of the electronic device 100 and the destination, and sends the start location of the electronic device 100 and the destination to the server 200, so that the server 200 can obtain, through planning, a recommended route from the start location to the destination.

S604: The server 200 obtains the recommended route through planning by using the start location of the electronic device 100 as a start point and using the destination as an end point.

Optionally, the server 200 may obtain, through planning, the recommended route from the start location to the destination based on information such as a road congestion status, a road restriction status, and a license plate restriction status.

Route information of the recommended route may include but is not limited to the following information: the start location (the start location of the electronic device 100), the end point (the destination entered by the user), names of a plurality of roads that are passed through, a total distance, and the like.

For example, the recommended route may be the recommended route shown in FIG. 6A.

S605: The server 200 divides the recommended route into a plurality of route segments, where the plurality of route segments include but are not limited to a first route segment and a second route segment.

The server 200 may divide the recommended route to obtain the plurality of route segments. In this way, the server 200 may obtain high-precision road data by segment, and then send the high-precision road data obtained by segment to the electronic device 100. In this way, the electronic device 100 may obtain the high-precision road data by segment, and display the lane-level navigation route by segment based on the segment-based high-precision road data.

The plurality of route segments include but are not limited to the first route segment and the second route segment.

It should be noted that distances of the plurality of route segments may be all the same, or distances of the plurality of route segments may be different, or may be partially the same, or may be all different. This is not limited in this application either.

A distance of the first route segment may be the same as or different from a distance of the second route segment.

The plurality of route segments obtained by the server 200 through division may be the plurality of route segments shown in FIG. 6A, for example, the route segment A, the route segment B, the route segment C, and the route segment D shown in FIG. 6A.

For example, the first route segment may be the route segment A, and the second route segment may be the route segment B, or the route segment B and the route segment C, or more route segments.

Optionally, in another embodiment, in S605, before the server 200 divides the recommended route into the plurality of route segments, the server 200 may determine whether the total distance of the recommended route is greater than a preset distance. When the total distance of the recommended route is greater than the preset distance, the server 200 divides the recommended route into the plurality of route segments, and obtains high-precision road data of each route segment by segment, that is, performs S606 to S612. When the total distance of the recommended route is less than the preset distance, the server 200 may directly obtain entire high-precision road data of the recommended route without dividing the recommended route into the plurality of route segments. Then, the server 200 sends the entire high-precision road data of the recommended route to the electronic device 100. The electronic device 100 may display an entire lane-level navigation route of the recommended route based on the entire high-precision road data of the recommended route.

S606: The server 200 obtains high-precision road data of the first route segment.

S607: The server 200 sends the high-precision road data of the first route segment to the electronic device 100.

S608: The electronic device 100 displays a lane-level navigation route of the first route segment based on the high-precision road data of the first route segment.

After the server 200 obtains the recommended route and divides the recommended route into the plurality of route segments, the server 200 may first obtain the high-precision road data of the first route segment, and send the high-precision road data of the first route segment to the electronic device 100. In this way, the electronic device 100 may display the lane-level navigation route of the first route segment based on the high-precision road data of the first route segment. In this way, the electronic device 100 can quickly display the lane-level navigation route, so that the vehicle can quickly travel toward the destination based on the lane-level navigation route.

In some embodiments, the high-precision road data of the first route segment may be rendered data. After the electronic device 100 obtains the rendered high-precision road data of the first route segment, the electronic device 100 may directly display the lane-level navigation route of the first route segment based on the high-precision road data of the first route segment.

In another embodiment, the high-precision road data of the first route segment may be unrendered data. After the electronic device 100 obtains the unrendered high-precision road data of the first route segment, in a possible implementation, the electronic device 100 may perform rendering based on the high-precision road data of the first route segment, to obtain rendered high-precision road data of the first route segment, and then display the lane-level navigation route of the first route segment based on the rendered high-precision road data of the first route segment. In another possible implementation, the electronic device 100 may send the high-precision road data of the first route segment to a rendering server. The rendering server may perform rendering based on the high-precision road data of the first route segment, to obtain rendered high-precision road data of the first route segment. Then, the rendering server sends the rendered high-precision road data of the first route segment to the electronic device 100. The electronic device 100 may display the lane-level navigation route of the first route segment based on the rendered high-precision road data of the first route segment.

It should be noted that the rendering server may be the same as or different from the server 200.

S609: The electronic device 100 sends an obtaining notification to the server 200.

Optionally, the server 200 may further send route information of the first route segment to the electronic device 100, so that the electronic device 100 may determine when to obtain high-precision road data of a next route segment from the server 200. The route information of the first route segment includes but is not limited to one or more of the following: a start location of the first route segment, an end point of the first route segment, names of one or more roads that the first route segment passes through, a total distance of the first route segment, and the like.

Optionally, when the vehicle travels on the first route segment, the electronic device 100 may determine a distance between the real-time location of the electronic device 100 and the end point of the first route segment based on the real-time location of the electronic device 100 and the end point of the first route segment. When the distance between the real-time location of the electronic device 100 and the end point of the first route segment is less than or equal to a preset distance (for example, 1.5 km), the electronic device 100 may send the obtaining notification to the server 200, to obtain high-precision road data of the second route segment.

Optionally, the electronic device 100 may alternatively obtain high-precision road data of a plurality of route segments at a time. The electronic device 100 does not need to repeatedly obtain high-precision road data of a same route segment.

Optionally, after the electronic device 100 travels on the first route segment, the electronic device 100 may send the obtaining notification to the server 200, to obtain the high-precision road data of the second route segment. Before traveling to the end point of the first route segment, if the high-precision road data of the second route segment is not obtained, the electronic device 100 may send the obtaining notification to the server 200 a plurality of times, and stop sending the obtaining notification until the high-precision road data of the second route segment is obtained.

For example, a length of the first route segment may be 3 km. After the electronic device 100 travels on the first route segment, the electronic device 100 may send the obtaining notification to the server 200, to obtain the high-precision road data of the second route segment.

When the high-precision road data of the second route segment is not obtained, the electronic device 100 may send the obtaining notification to the server 200 again when moving to a location that is 2 km away from the end point of the first route segment.

When the high-precision road data of the second route segment is not obtained, the electronic device 100 may send the obtaining notification to the server 200 again when moving to a location that is 1.5 km away from the end point of the first route segment.

When the high-precision road data of the second route segment is not obtained, the electronic device 100 may send the obtaining notification to the server 200 again when moving to a location that is 1 km away from the end point of the first route segment.

When the high-precision road data of the second route segment is not obtained, if the electronic device 100 has not obtained the high-precision road data of the second route segment yet when moving to a location that is less than 1 km away from the end point of the first segment route, the electronic device 100 may obtain low-precision road data of the second route segment. When the electronic device 100 moves to the second route segment, the electronic device 100 may switch to displaying a road-level navigation route of the second route segment.

S610: In response to the obtaining notification, the server 200 obtains the high-precision road data of the second route segment.

Optionally, the high-precision road data of the second route segment may be obtained after S606. After the server 200 receives the obtaining notification sent by the electronic device 100, the server 200 may immediately send the high-precision road data of the second route segment to the electronic device 100.

S611: The server 200 sends the high-precision road data of the second route segment to the electronic device 100.

S612: The electronic device 100 displays a lane-level navigation route of the second route segment based on the high-precision road data of the second route segment.

Descriptions of S612 are similar to those of S608. For details, refer to the descriptions of S608. Details are not described herein again in this application.

In response to the obtaining notification, the server 200 may obtain the high-precision road data of the second route segment, and send the high-precision road data of the second route segment to the electronic device 100. The electronic device 100 may display the lane-level navigation route of the second route segment based on the high-precision road data of the second route segment.

In this way, when the vehicle travels to the second route segment, the user may drive the vehicle to travel toward the destination based on the lane-level navigation route that is of the second route segment and that is displayed by the electronic device 100.

Optionally, in the embodiment in FIG. 6F, the electronic device 100 may interact with the server 200 through the map application. For example, the map application includes a map SDK, and the electronic device 100 may interact with the server 200 through the map SDK in the map application. In the embodiment in FIG. 6F, the electronic device 100 displays the lane-level navigation route, or may display the lane-level navigation route through the map SDK in the map application.

**Optionally, when the electronic device 100 or the server 200 determines that the vehicle yaws, the server 200 may obtain an updated recommended route through planning based on a yaw location of the electronic device 100 and the destination entered by the user. The server 200 may divide the updated recommended route to obtain a plurality of updated route segments. The electronic device 100 may also obtain high-precision road data of the updated route by segment, and display a lane-level navigation route corresponding to the updated recommended route.**

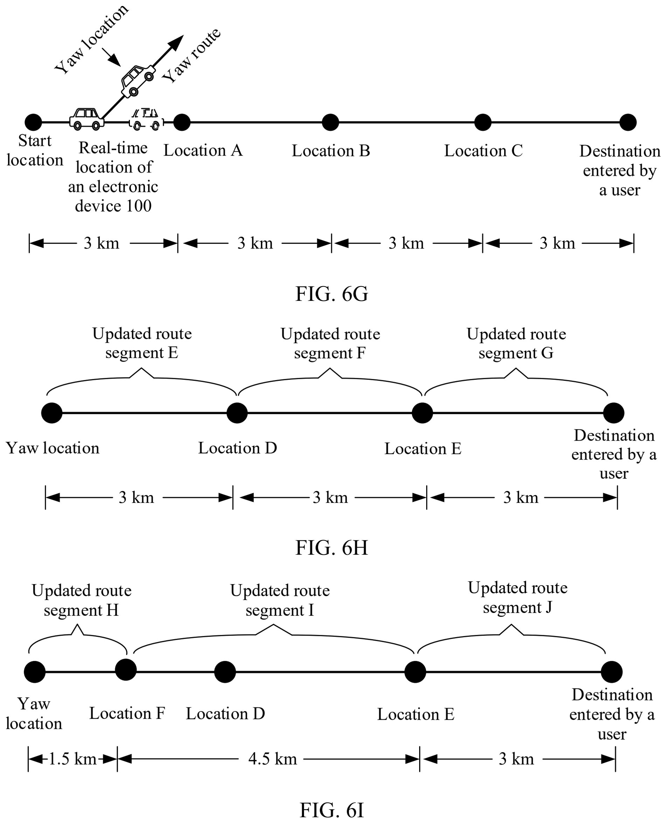

**FIG. 6G to FIG. 6J** **are diagrams in which the electronic device 100 obtains the high-precision road data by segment when the vehicle yaws.**

For example, as shown in FIG. 6G, when the vehicle travels at a location on the route segment A, the server 200 determines, based on the real-time location of the electronic device 100 and the route information of the route segment A, that the vehicle does not travel toward the location A based on the route segment A, and that the location of the vehicle has deviated from the route segment A, and the vehicle travels on a yaw route shown in FIG. 6G. If the server 200 determines, within specific duration (for example, 5 seconds), that the vehicle keeps yawing, the server 200 may determine the yaw location of the vehicle based on the real-time location of the electronic device 100, and obtain the updated recommended route through re-planning based on the yaw location of the vehicle and the destination entered by the user. In addition, the server 200 may also send a notification to the electronic device 100, so that the electronic device 100 prompts the user that the vehicle currently yaws and the updated recommended route is used.

After obtaining the updated recommended route, the server 200 may divide the updated recommended route to obtain the plurality of updated route segments. In this way, the server 200 may obtain the high-precision road data by segment, and then send the high-precision road data obtained by segment to the electronic device 100. In this way, the electronic device 100 may obtain the high-precision road data by segment, and display, by segment based on the segment-based high-precision road data, the lane-level navigation route corresponding to the updated recommended route.

The server 200 may divide the updated recommended route to obtain the plurality of updated route segments. In this way, the server 200 may obtain the high-precision road data by segment, and then send the high-precision road data obtained by segment to the electronic device 100. In this way, the electronic device 100 may obtain the high-precision road data by segment, and display the lane-level navigation route by segment based on the segment-based high-precision road data.

For example, as shown in FIG. 6H, the server 200 may divide the updated recommended route at an interval of a preset distance (for example, 3 km) to obtain updated route segments. For example, a total distance of the updated recommended route is 9 km, and the plurality of updated route segments obtained by the server 200 may be an updated route segment E, an updated route segment F, and an updated route segment G.

A start point of the updated route segment E is the yaw location, the yaw location is determined by the server 200 based on the real-time location of the electronic device 100, and an end point of the updated route segment E is a location D.

A start point of the updated route segment F is the location D, and an end point of the updated route segment F is a location E.

A start point of the updated route segment G is the location E, and an end point of the updated route segment F is the destination entered by the user.

Route lengths of the updated route segment E, the updated route segment F, and the updated route segment G are all 3 km.

In some embodiments, to enable the electronic device 100 to quickly display the lane-level navigation route corresponding to the updated recommended route, the server 200 may shorten a distance or distances of one or more leading updated route segments (for example, a 1^{st} updated route segment) in the plurality of updated route segments, to increase a speed of obtaining high-precision road data of the 1^{st} updated route segment by the server 200, and increase a speed of displaying, by the electronic device 100, a lane-level navigation route corresponding to the 1^{st} updated route segment.

For example, as shown in FIG. 6I, a start point of an updated route segment H is the yaw location, and the end point of the updated route segment E is a location F. The location F is different from the location D. A route length of the updated route segment H is 1.5 km. The route length of the updated route segment H is less than the route length of the updated route segment E. In this way, the server 100 may obtain high-precision road data of the updated route segment H at a higher speed, to increase a speed of displaying, by the electronic device 100, a lane-level navigation route corresponding to the updated route segment H.

A start point of an updated route segment I is the location F, and an end point of the updated route segment I is the location E. A route length of the updated route segment I is 4.5 km.

A start point of an updated route segment J is the location E, and an end point of the updated route segment F is the destination entered by the user. A route length of the updated route segment J is 3 km.

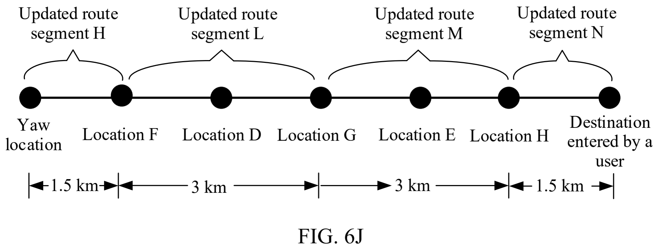

For another example, as shown in FIG. 6J, a start point of an updated route segment H is the yaw location, and the end point of the updated route segment E is a location F. The location F is different from the location D. A route length of the updated route segment H is 1.5 km. The route length of the updated route segment H is less than the route length of the updated route segment E. In this way, the server 100 may obtain high-precision road data of the updated route segment H at a higher speed, to increase a speed of displaying, by the electronic device 100, a lane-level navigation route corresponding to the updated route segment H.

A start point of an updated route segment L is the location F, and an end point of the updated route segment I is a location G. A route length of the updated route segment L is 3 km.

A start point of an updated route segment M is the location G, and an end point of the updated route segment M is a location H. A route length of the updated route segment M is 3 km.

A start point of an updated route segment N is the location H, and an end point of the updated route segment N is the destination entered by the user. A route length of the updated route segment N is 1.5 km.

A difference between FIG. 6I and FIG. 6J lies in different manners in which the server 200 divides the updated recommended route to obtain the plurality of updated route segments. In

FIG. 6I, the server 200 places a remaining route of the 1^{st} updated route segment in a 2^{nd} updated route segment. In this case, a 3^{rd} and subsequent updated route segments are still obtained through division based on the preset distance (for example, 3 km).

In FIG. 6J, the server 200 divides a remaining updated recommended route in the updated recommended route other than the 1^{st} updated route segment based on the preset distance (for example, 3 km), to obtain a plurality of updated route segments. A last updated route segment which is less than 3 km is also used as an updated route segment, or may be combined with a second-to-last updated route segment to obtain an updated route segment.

In addition to the manners of dividing the updated recommended route to obtain the plurality of updated route segments shown in FIG. 6H to FIG. 6J, the updated recommended route may alternatively be divided into the plurality of updated route segments in another manner. This is not limited in this application either.

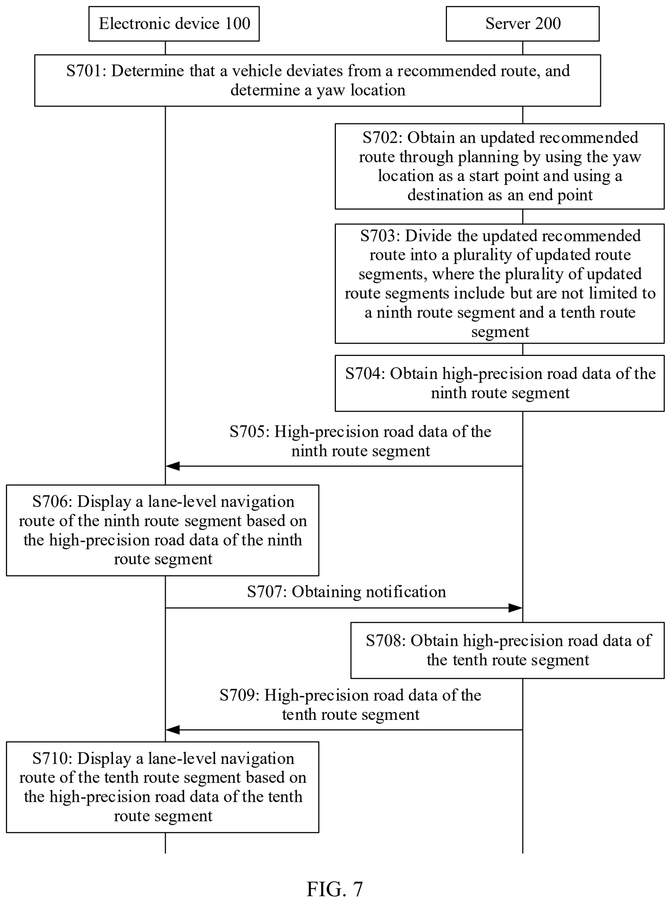

**FIG. 7** **is a schematic flowchart of a method for displaying a lane-level navigation route by segment by the electronic device 100 when the vehicle yaws.**

S701: The electronic device 100 or the server 200 determines that the vehicle deviates from a recommended route, and determines a yaw location.

After the server 200 divides the recommended route into a plurality of route segments, the server 200 may send route information of a route segment to the electronic device 100, so that the electronic device 100 may determine when to obtain high-precision road data of a next route segment from the server 200. The route information of the route segment includes but is not limited to one or more of the following: a start location of the route segment, an end point (a location A) of the route segment, names of one or more roads that the route segment passes through, a total distance of the route segment, and the like.

The electronic device 100 or the server 200 determines that the vehicle deviates from the recommended route, and determines the yaw location.

In a possible implementation, the electronic device 100 may determine, based on a real-time location of the electronic device 100 and the route information of the route segment, whether the vehicle yaws. When determining that the vehicle yaws, the electronic device 100 may send a message to the server 200, so that the server 200 may obtain an updated recommended route through re-planning based on the real-time location of the electronic device 100. When determining that the vehicle does not yaw, the electronic device 100 may not send a message to the server 200, and the electronic device 100 may continue traveling toward a destination based on the current recommended route.

In another possible implementation, the electronic device 100 may alternatively send the real-time location of the electronic device 100 to the server 200. The server 200 may determine, based on the real-time location of the electronic device 100 and the route information of the route segment, whether the vehicle yaws. When determining that the vehicle yaws, the server 200 may obtain an updated recommended route through planning based on the real-time location of the electronic device 100, and send a notification to the electronic device 100. The electronic device 100 may prompt the user that the vehicle currently yaws and use the updated recommended route. When determining that the vehicle does not yaw, the server 200 may not send a message to the electronic device 100, and the electronic device 100 may continue traveling toward a destination based on the current recommended route.

For example, as shown in FIG. 6G, the yaw location of the vehicle may be a yaw location on the yaw route shown in FIG. 6G.

S702: The server 200 obtains the updated recommended route through planning by using the yaw location as the start point and using the destination as the end point.

After the electronic device 100 or the server 200 determines the yaw location of the vehicle, the server 200 may obtain the updated recommended route through planning by using the yaw location as the start point and using the destination as the end point.

For example, the updated recommended route may be the updated recommended route shown in FIG. 6H. The start point of the updated recommended route may be the yaw location of the vehicle, and the end point of the updated recommended route may be the destination entered by the user.

S703: The server 200 divides the updated recommended route into a plurality of updated route segments, where the plurality of updated route segments include but are not limited to a ninth route segment and a tenth route segment.

The server 200 may divide the updated recommended route to obtain the plurality of updated route segments. In this way, the server 200 may obtain high-precision road data by segment, and then send the high-precision road data obtained by segment to the electronic device 100. In this way, the electronic device 100 may obtain the high-precision road data by segment, and display the lane-level navigation route by segment based on the segment-based high-precision road data.

The plurality of updated route segments include but are not limited to the ninth route segment and the tenth route segment.

For example, the ninth route segment may be the updated route segment E shown in FIG. 6H, and the tenth route segment may be the updated route segment F or the updated route segment F and the updated route segment G shown in FIG. 6H.

In some embodiments, the server 200 may shorten a distance or distances of one or more leading updated route segments (for example, a 1^{st} updated route segment) in the plurality of updated route segments, to increase a speed of obtaining high-precision road data of the 1^{st} updated route segment by the server 200, and increase a speed of displaying, by the electronic device 100, a lane-level navigation route corresponding to the 1^{st} updated route segment.

For example, the ninth route segment may alternatively be the updated route segment H shown in FIG. 6I, and the tenth route segment may alternatively be the updated route segment I or the updated route segment I and the updated route segment J shown in FIG. 6I.

For example, the ninth route segment may alternatively be the updated route segment H shown in FIG. 6J, and the tenth route segment may alternatively be the updated route segment L or the updated route segment L and the updated route segment M shown in FIG. 6I.

S704: The server 200 obtains high-precision road data of the ninth route segment.

S705: The server 200 sends the high-precision road data of the ninth route segment to the electronic device 100.

S706: The electronic device 100 displays a lane-level navigation route of the ninth route segment based on the high-precision road data of the ninth route segment.

After the server 200 obtains the updated recommended route and divides the updated recommended route into the plurality of updated route segments, the server 200 may first obtain the high-precision road data of the ninth route segment, and send the high-precision road data of the ninth route segment to the electronic device 100. In this way, the electronic device 100 may display the lane-level navigation route of the ninth route segment based on the high-precision road data of the ninth route segment. In this way, the electronic device 100 can quickly display the lane-level navigation route, so that the vehicle can quickly travel toward the destination based on the lane-level navigation route.

In some embodiments, the high-precision road data of the ninth route segment may be rendered data. After the electronic device 100 obtains the rendered high-precision road data of the ninth route segment, the electronic device 100 may directly display the lane-level navigation route of the ninth route segment based on the high-precision road data of the ninth route segment.

In another embodiment, the high-precision road data of the ninth route segment may be unrendered data. After the electronic device 100 obtains the unrendered high-precision road data of the ninth route segment, in a possible implementation, the electronic device 100 may perform rendering based on the high-precision road data of the ninth route segment to obtain rendered high-precision road data of the ninth route segment, and then display the lane-level navigation route of the ninth route segment based on the rendered high-precision road data of the ninth route segment. In another possible implementation, the electronic device 100 may send the high-precision road data of the ninth route segment to a rendering server, and the rendering server may perform rendering based on the high-precision road data of the ninth route segment to obtain rendered high-precision road data of the ninth route segment. Then, the rendering server sends the rendered high-precision road data of the ninth route segment to the electronic device 100, and the electronic device 100 may display the lane-level navigation route of the ninth route segment based on the rendered high-precision road data of the third route segment.

It should be noted that the rendering server may be the same as or different from the server 200.

S707: The electronic device 100 sends an obtaining notification to the server 200.

Optionally, the server 200 may further send route information of the ninth route segment to the electronic device 100, so that the electronic device 100 may determine when to obtain high-precision road data of a next updated route segment from the server 200. The route information of the ninth route segment includes but is not limited to one or more of the following: a start location of the ninth route segment (the yaw location), an end point (a location D or a location F) of the ninth route segment, names of one or more roads that the ninth route segment passes through, a total distance (for example, 3 km or 1.5 km) of the ninth route segment, and the like.

Optionally, when the vehicle travels on the ninth route segment, the electronic device 100 may determine a distance between the real-time location of the electronic device 100 and the end point of the ninth route segment based on the real-time location of the electronic device 100 and the end point of the ninth route segment. When the distance between the real-time location of the electronic device 100 and the end point of the ninth route segment is less than or equal to a preset distance (for example, 0.5 km), the electronic device 100 may send the obtaining notification to the server 200, to obtain high-precision road data of the tenth route segment.

S708: In response to the obtaining notification, the server 200 obtains the high-precision road data of the tenth route segment.

Optionally, the high-precision road data of the tenth route segment may be obtained after S704. After the server 200 receives the obtaining notification sent by the electronic device 100, the server 200 may immediately send the high-precision road data of the tenth route segment to the electronic device 100.

S709: The server 200 sends the high-precision road data of the tenth route segment to the electronic device 100.

S710: The electronic device 100 displays a lane-level navigation route of the tenth route segment based on the high-precision road data of the tenth route segment.

Descriptions of S710 are similar to those of S706. For details, refer to the descriptions of S706. Details are not described herein again in this application.

In response to the obtaining notification, the server 200 may obtain the high-precision road data of the tenth route segment, and send the high-precision road data of the tenth route segment to the electronic device 100. The electronic device 100 may display the lane-level navigation route of the tenth route segment based on the high-precision road data of the tenth route segment.

In this way, when the vehicle travels to the tenth route segment, the user may drive the vehicle to travel toward the destination based on the lane-level navigation route that is of the tenth route segment and that is displayed by the electronic device 100.

Optionally, in the embodiment in FIG. 7, the electronic device 100 may interact with the server 200 through the map application. For example, the map application includes a map SDK, and the electronic device 100 may interact with the server 200 through the map SDK in the map application. In the embodiment in FIG. 6F, the electronic device 100 displays the lane-level navigation route, or may display the lane-level navigation route through the map SDK in the map application.

**In another embodiment, after the server 200 determines the recommended route based on the start location of the electronic device 100 and the destination entered by the user, the server 200 may obtain the route information of the recommended route. The route information of the recommended route may include but is not limited to the following information: the start location (the start location of the electronic device 100), the end point (the destination entered by the user), the names of the plurality of roads that are passed through, the total distance, and the like. The server 200 may determine, based on the route information of the recommended route, a poor-network-connection road section included in the recommended route, and adjust the route segments of the recommended route, so that when the vehicle travels to the poor-network-connection road section, the vehicle can still obtain high-precision road data and display a lane-level navigation route.**

The server 200 may determine, based on but not including the following manners, the poor-network-connection road section included in the recommended route.

Method 1: The recommended route includes a special road section, and there is no network or a network is poor in the special road section. For example, the special road section may include but is not limited to a tunnel road section, a canyon road section, and the like.

Manner 2: The server 200 may alternatively receive data fed back by a user group, and determine road sections having a network, road sections having no network, or road sections having a poor network.

The server 200 may alternatively determine, in another manner, the poor-network-connection road section included in the recommended route. This is not limited in this application.

The poor-network-connection road section may include a start point of the poor-network-connection road section and an end point of the poor-network-connection road section.

As shown in FIG. 6A, the server 200 may divide the recommended route to obtain the plurality of route segments, for example, the route segment A, the route segment B, the route segment C, and the route segment D.

**When the recommended route includes the poor-network-connection road section, the server 200 may adjust the plurality of route segments in the recommended route, so that the poor-network-connection road section is in one route segment (which may be referred to as a no-network-connection route segment), and an end point of the no-network-connection route segment is an end point of a first-length route after the poor-network-connection road section. In this way, when the vehicle travels on the first-length route in the no-network-connection route segment, the electronic device 100 may obtain high-precision road data of one or more route segments after the no-network-connection route segment.**

**In some embodiments, the server 200 may alternatively use a start point of the poor-network-connection road section as a start point of the no-network-connection route segment, to reduce a distance length of the no-network-connection route segment, and reduce a data amount of high-precision road data of the no-network-connection route segment, so that the electronic device 100 can quickly obtain the high-precision road data of the no-network-connection route segment.**

**A first length may be a minimum length for the electronic device 100 to download high-precision road data of a route segment.**

**In a possible implementation, the first length may be preset. For example, the first length may be fixed at 3 km. When the electronic device 100 moves to the first-length route, the electronic device 100 may have sufficient time to download high-precision road data of a next route segment.**

**In another possible implementation, the first length may be related to a distance of the route segment, and a value of the first length varies with the distance of the route segment. In an embodiment, the first length may be the same as the distance of the route segment. For example, when the distance of the route segment is 3 km, the first length may be 3 km; or when the distance of the route segment is 1.5 km, the first length may be 1.5 km. When the electronic device 100 moves to the first-length route, the electronic device 100 may have sufficient time to download high-precision road data of a next route segment.**

**In another possible implementation, the first length may be related to a moving speed of the electronic device 100 and a distance of the route segment, and the moving speed of the electronic device 100 is related to a traveling speed of the vehicle. The electronic device 100 sends the real-time location of the electronic device 100 to the server 200 in real time/periodically/at an uncertain time interval. The server 200 may determine the moving speed of the electronic device 100 based on a location change of the electronic device 100 within specific duration. Then, the server 200 obtains the distance of the route segment, and determines the first length with reference to the moving speed of the electronic device 100 and the distance of the route segment. When the distance of the route segment is fixed, a higher moving speed of the electronic device 100 indicates a longer distance of the first length, and a lower moving speed of the electronic device 100 indicates a shorter distance of the first length. In this way, when the electronic device 100 moves to the first-length route, the electronic device 100 may have sufficient time to download high-precision road data of a next route segment.**

**The first length may alternatively be determined in another manner. This is not limited in this application.**

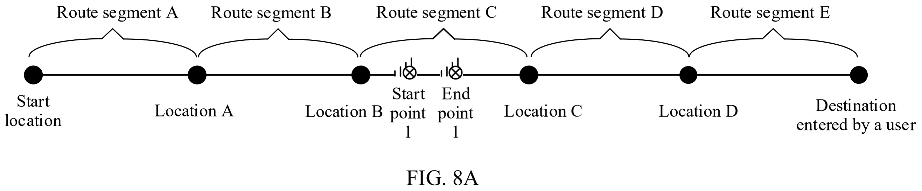

**FIG. 8A to FIG. 8K** **are diagrams of how the server 200 adjusts the plurality of route segments in the recommended route based on the start point and the end point of the poor-network-connection road section.**

**In some embodiments, the server 200 adds the first-length route after the poor-network-connection road section to obtain the no-network-connection route segment. The start point of the no-network-connection route segment is the same as the start point of the poor-network-connection road section, and a distance between the end point of the no-network-connection route segment and the end point of the poor-network-connection road section is the first length.**

**FIG. 8A** **is a diagram of the recommended route including the poor-network-connection road section.**

As shown in FIG. 8A, the start point of the poor-network-connection road section may be a start point 1, and the end point of the poor-network-connection road section may be an end point 1. Both the start point 1 and the end point 1 are located in the route segment C.

When the poor-network-connection road section includes a tunnel, the start point 1 and the end point 1 of the poor-network-connection road section may be determined based on a tunnel length. The start point 1 may be a start point of the tunnel, and the end point 1 may be an end point of the tunnel.

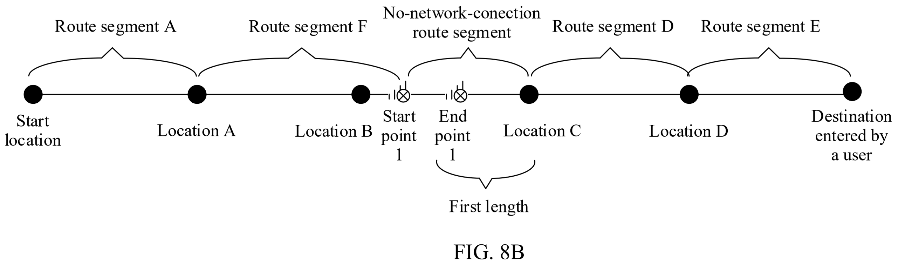

**FIG. 8B to FIG. 8F** **are diagrams of obtaining the no-network-connection route segment.**

For example, as shown in FIG. 8B, the server 200 adds the first-distance route after the end point 1 of the poor-network-connection road section, to obtain the no-network-connection route segment. In FIG. 8B, the start point of the no-network-connection route segment is the start point 1, and the end point of the no-network-connection route segment is the location C. A distance between the end point 1 and the location C is the first length.

As shown in FIG. 8B, the server 200 further needs to adjust the end point of the route segment B to the start point 1, and use the route segment B after the end point adjustment as the route segment F.

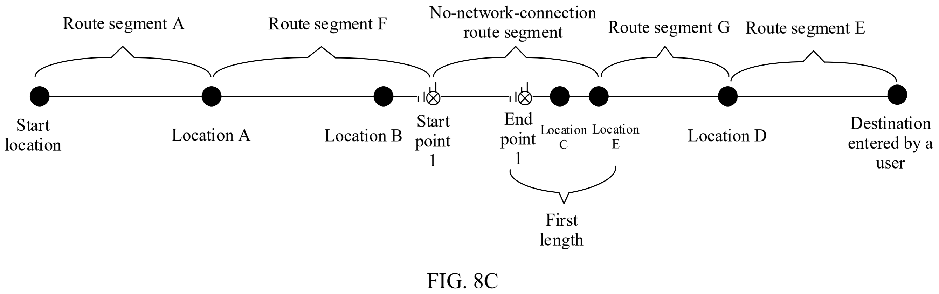

For example, as shown in FIG. 8C, the server 200 adds the first-distance route after the end point 1 of the poor-network-connection road section, to obtain the no-network-connection route segment. In FIG. 8C, the start point of the no-network-connection route segment is the start point 1, and the end point of the no-network-connection route segment is the location E. A distance between the end point 1 and the location E is the first length.

As shown in FIG. 8C, the server 200 further needs to adjust the end point of the route segment B to the start point 1, and use the route segment B after the end point adjustment as the route segment F.

As shown in FIG. 8C, the server 200 further needs to adjust the start point of the route segment D to the location E, and use the route segment D after the start point adjustment as the route segment G. Optionally, the route segment G may alternatively be combined with the route segment E to obtain one route segment.

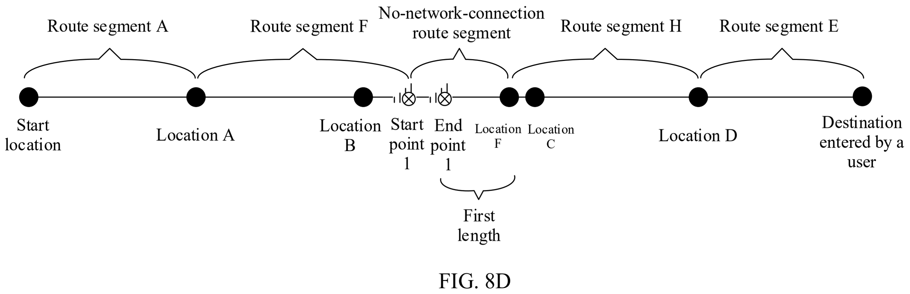

For example, as shown in FIG. 8D, the server 200 adds the first-distance route after the end point 1 of the poor-network-connection road section, to obtain the no-network-connection route segment. In FIG. 8D, the start point of the no-network-connection route segment is the start point 1, and the end point of the no-network-connection route segment is the location F. A distance between the end point 1 and the location F is the first length.

As shown in FIG. 8D, the server 200 further needs to adjust the end point of the route segment B to the start point 1, and use the route segment B after the end point adjustment as the route segment F.

As shown in FIG. 8D, the server 200 further needs to adjust the start point of the route segment D to the location F, and use the route segment D after the start point adjustment as the route segment H.

For example, the first length may be the same as the length of the route segment. For example, the length of the route segment is 3 km, and the first length is also 3 km.

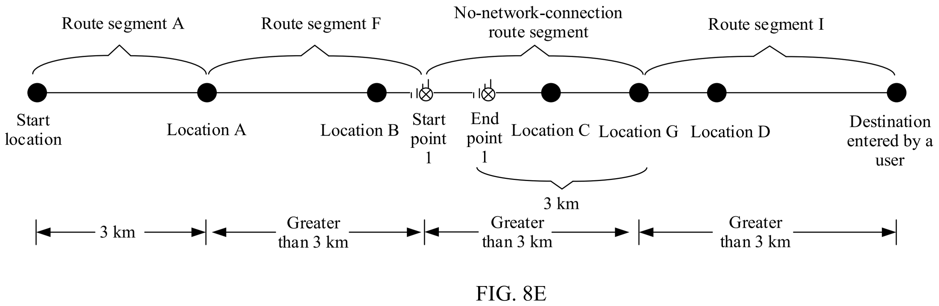

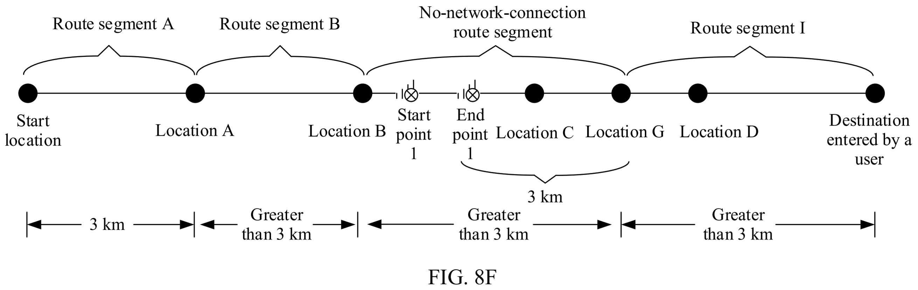

FIG. 8E and FIG. 8F are example diagrams in which the server 200 obtains the no-network-connection route segment when the first length and the length of the route segment are 3 km.

For example, as shown in FIG. 8E, the server 200 adds a 3-km route after the end point 1 of the poor-network-connection road section, to obtain the no-network-connection route segment. In FIG. 8E, the start point of the no-network-connection route segment is the start point 1, and the end point of the no-network-connection route segment is the location G. A distance between the end point 1 and the location G is 3 km.

As shown in FIG. 8E, the server 200 further needs to adjust the end point of the route segment B to the start point 1, and use the route segment B after the end point adjustment as the route segment F.

As shown in FIG. 8E, the server 200 further needs to adjust the start point of the route segment E to the location G, and use the route segment E after the start point adjustment as the route segment I.

Optionally, in another embodiment, the start point of the poor-network-connection road section may not be used as the start point of the no-network-connection route segment. Alternatively, the location B may be used as the start point of the no-network-connection route segment.

For example, in FIG. 8B to FIG. 8D, the end point of the route segment F may be the location B, and the start point of the no-network-connection route segment may be the location B.

For example, as shown in FIG. 8F, similar to that in FIG. 8E, the server 200 may also use the location B as the start point of the no-network-connection route segment.

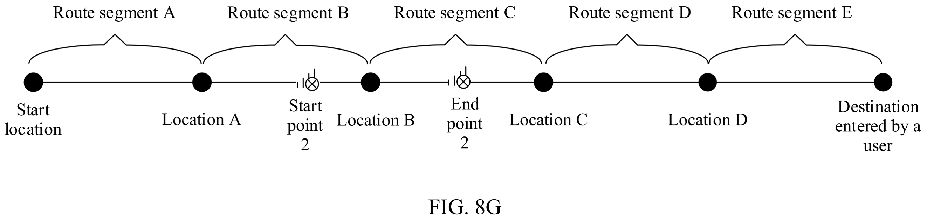

**FIG. 8G** **is another diagram of the recommended route including the poor-network-connection road section.**

As shown in FIG. 8G, the start point of the poor-network-connection road section may be a start point 2, and the end point of the poor-network-connection road section may be an end point 2. The start point 2 and the end point 2 are located in different route segments. For example, the start point 2 is located in the route segment B, and the end point 2 is located in the route segment C.

When the poor-network-connection road section includes a tunnel, the start point 2 and the end point 2 of the poor-network-connection road section may be determined based on a tunnel length. The start point 2 may be a start point of the tunnel, and the end point 2 may be an end point of the tunnel.

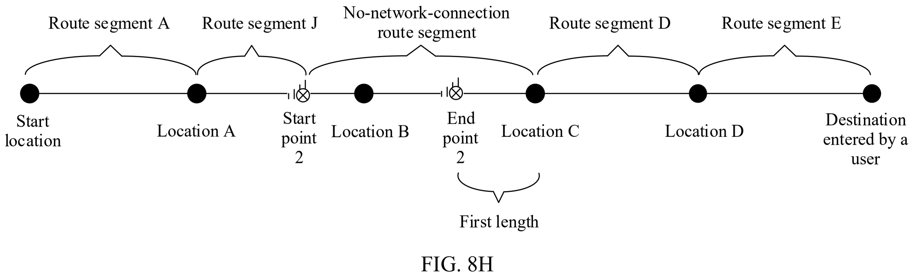

**FIG. 8H to FIG. 8K** **are diagrams of obtaining the no-network-connection route segment.**

For example, as shown in FIG. 8H, the server 200 adds the first-distance route after the end point 2 of the poor-network-connection road section, to obtain the no-network-connection route segment. In FIG. 8H, the start point of the no-network-connection route segment is the start point 2, and the end point of the no-network-connection route segment is the location C. A distance between the end point 2 and the location C is the first length.

As shown in FIG. 8H, the server 200 further needs to adjust the end point of the route segment B to the start point 2, and use the route segment B after the end point adjustment as the route segment J. Optionally, the route segment A and the route segment J may alternatively be combined into one route segment.

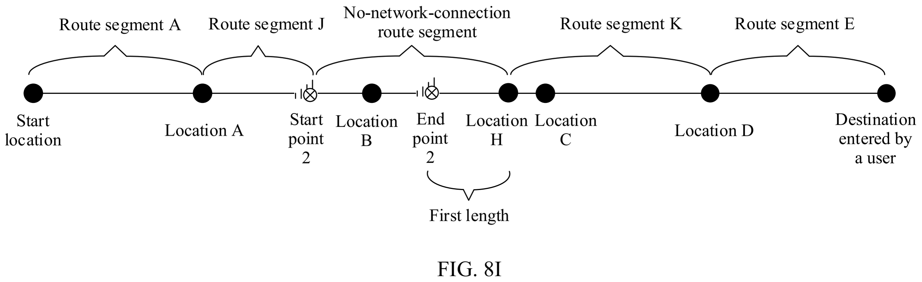

For example, as shown in FIG. 8I, the server 200 adds the first-distance route after the end point 2 of the poor-network-connection road section, to obtain the no-network-connection route segment. In FIG. 8H, the start point of the no-network-connection route segment is the start point 2, and the end point of the no-network-connection route segment is the location H. A distance between the end point 2 and the location H is the first length.

As shown in FIG. 8I, the server 200 further needs to adjust the end point of the route segment B to the start point 2, and use the route segment B after the end point adjustment as the route segment J. Optionally, the route segment A and the route segment J may alternatively be combined into one route segment.

As shown in FIG. 8I, the start point of the route segment D is adjusted to the location H, and the route segment D after the start point adjustment is used as the route segment K.

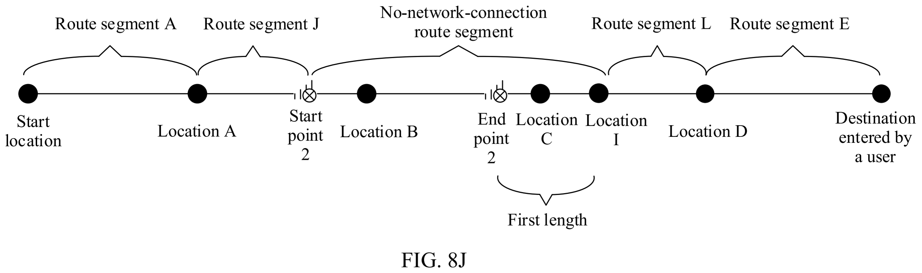

For example, as shown in FIG. 8J, the server 200 adds the first-distance route after the end point 2 of the poor-network-connection road section, to obtain the no-network-connection route segment. In FIG. 8J, the start point of the no-network-connection route segment is the start point 2, and the end point of the no-network-connection route segment is the location I. A distance between the end point 2 and the location I is the first length.

As shown in FIG. 8J, the server 200 further needs to adjust the end point of the route segment B to the start point 2, and use the route segment B after the end point adjustment as the route segment J. Optionally, the route segment A and the route segment J may alternatively be combined into one route segment.

As shown in FIG. 8J, the server 200 further needs to adjust the start point of the route segment D to the location I, and use the route segment D after the start point adjustment as the route segment L. Optionally, the route segment L may alternatively be combined with the route segment E to obtain one route segment.

For example, the first length may be the same as the length of the route segment. For example, the length of the route segment is 3 km, and the first length is also 3 km.

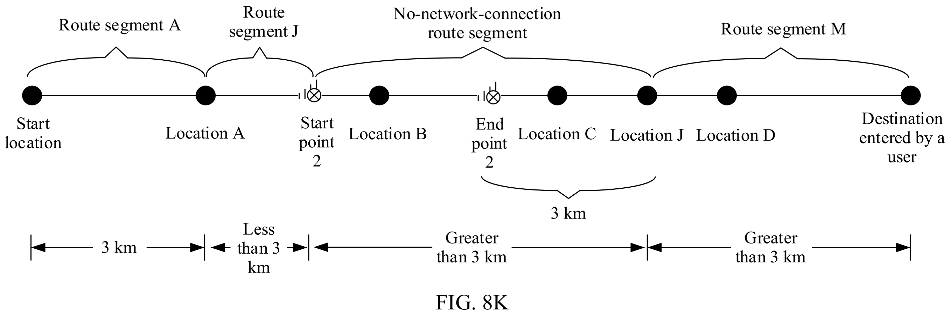

FIG. 8K is an example diagram in which the server 200 obtains the no-network-connection route segment when the first length and the length of the route segment are 3 km.

For example, as shown in FIG. 8K, the server 200 adds a 3-km route after the end point 2 of the poor-network-connection road section, to obtain the no-network-connection route segment. In FIG. 8K, the start point of the no-network-connection route segment is the start point 2, and the end point of the no-network-connection route segment is the location J. A distance between the end point 2 and the location J is 3 km.

As shown in FIG. 8K, the server 200 further needs to adjust the end point of the route segment B to the start point 2, and use the route segment B after the end point adjustment as the route segment J. Optionally, the route segment J may alternatively be combined with the route segment A to obtain one route segment.

As shown in FIG. 8K, the server 200 further needs to adjust the start point of the route segment E to the location J, and use the route segment J after the start point adjustment as the route segment M.

Optionally, in another embodiment, the start point of the poor-network-connection road section may not be used as the start point of the no-network-connection route segment. Alternatively, the location B may be used as the start point of the no-network-connection route segment.

For example, in FIG. 8H to FIG. 8J, the end point of the route segment J may be the location B, and the start point of the no-network-connection route segment may be the location B.

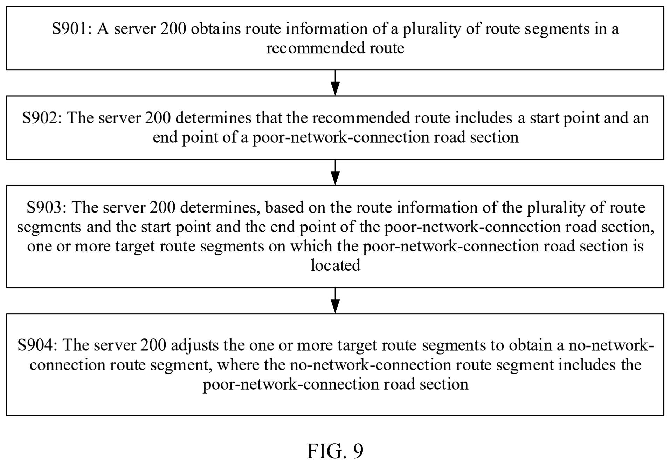

**FIG. 9** **is a schematic flowchart of a method for obtaining a no-network-connection route segment based on a recommended route according to this application.**

S901: The server 200 obtains route information of a plurality of route segments in the recommended route.

For how the server 200 obtains the route information of the plurality of route segments in the recommended route, refer to the descriptions of the embodiment in FIG. 6A.

S902: The server 200 determines that the recommended route includes a start point and an end point of a poor-network-connection road section.

In a possible implementation, the recommended route includes a special road section, and there is no network or a network is poor in the special road section. For example, the special road section may include but is not limited to a tunnel road section, a canyon road section, and the like. The server 200 may determine the start point and the end point of the poor-network-connection road section based on the special road section.

In another possible implementation, the server 200 may alternatively receive data fed back by a user group, and determine road sections having a network, road sections having no network, or road sections having a poor network.

The server 200 may alternatively determine, in another manner, the poor-network-connection road section included in the recommended route. This is not limited in this application.

S903: The server 200 determines, based on the route information of the plurality of route segments and the start point and the end point of the poor-network-connection road section, one or more target route segments on which the poor-network-connection road section is located.

The one or more target route segments are used by the server 200 to obtain the no-network-connection route segment.

For example, the one or more target route segments may be the route segment C shown in FIG. 8A.

For example, the one or more target route segments may alternatively be the route segment B and the route segment C shown in FIG. 8H.

S904: The server 200 adjusts the one or more target route segments to obtain the no-network-connection route segment, where the no-network-connection route segment includes the poor-network-connection road section.

For example, the no-network-connection route segment may be the no-network-connection route segment shown in FIG. 8B to FIG. 8F. For details, refer to the descriptions of how to obtain the no-network-connection route segment in FIG. 8B to FIG. 8F. Details are not described herein again in this application.

After the server 200 obtains the plurality of route segments including the no-network-connection route segment, the electronic device 100 may sequentially obtain, from the server 200, high-precision road data of the plurality of route segments, and display a lane-level navigation route by segment.

Specifically, when the electronic device 100 moves along the recommended route to the route segment A, the electronic device 100 may obtain high-precision road data of the route segment F. When the electronic device 100 moves to the route segment F, a lane-level navigation route of the route segment F may be displayed.

When the electronic device 100 moves along the recommended route to the route segment F, the electronic device 100 may obtain high-precision road data of the no-network-connection route segment. When the electronic device 100 moves to the no-network-connection route segment, a lane-level navigation route of the no-network-connection route segment may be displayed.

When the electronic device 100 moves along the recommended route to the no-network-connection route segment, the electronic device 100 may obtain high-precision road data of the route segment D, the route segment G, or the route segment H. When the electronic device 100 moves to the route segment D, the route segment G, or the route segment H, a lane-level navigation route of the route segment D, the route segment G, or the route segment H may be displayed.

For example, the no-network-connection route segment may alternatively be the no-network-connection route segment shown in FIG. 8H to FIG. 8K. For details, refer to the descriptions of how to obtain the no-network-connection route segment in FIG. 8H to FIG. 8K. Details are not described herein again in this application.

After the server 200 obtains the plurality of route segments including the no-network-connection route segment, the electronic device 100 may sequentially obtain, from the server 200, high-precision road data of the plurality of route segments, and display a lane-level navigation route by segment.

Specifically, when the electronic device 100 moves along the recommended route to the route segment A, the electronic device 100 may obtain high-precision road data of the route segment J. When the electronic device 100 moves to the route segment J, a lane-level navigation route of the route segment J may be displayed.

When the electronic device 100 moves along the recommended route to the route segment J, the electronic device 100 may obtain high-precision road data of the no-network-connection route segment. When the electronic device 100 moves to the no-network-connection route segment, a lane-level navigation route of the no-network-connection route segment may be displayed.

When the electronic device 100 moves along the recommended route to the no-network-connection route segment, the electronic device 100 may obtain high-precision road data of the route segment D, the route segment K, or the route segment L. When the electronic device 100 moves to the route segment D, the route segment K, or the route segment L, a lane-level navigation route of the route segment D, the route segment K, or the route segment L may be displayed.

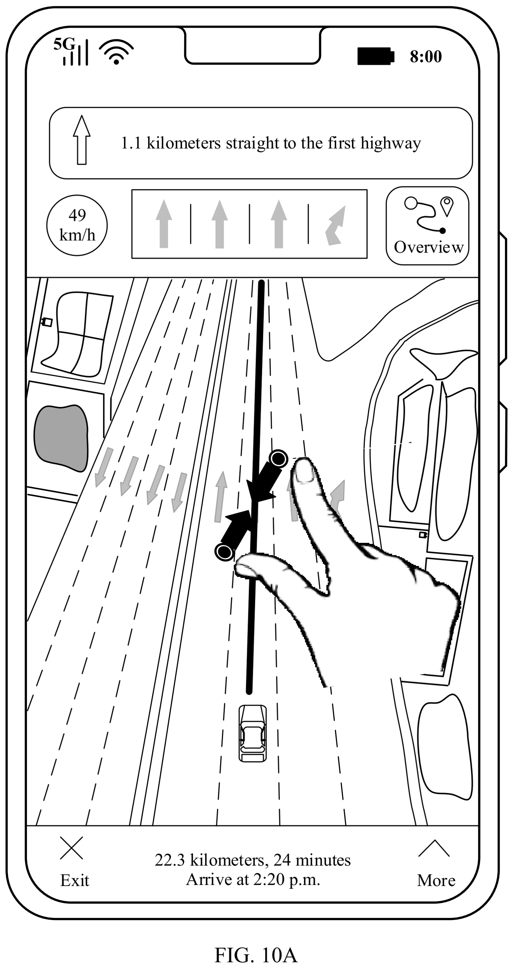

**Switching between a lane-level navigation route and a road-level navigation route (****FIG. 10A to FIG. 10F****)**

**The user manually switches the lane-level navigation route and the road-level navigation route (****FIG. 10A to FIG. 10E****).**

**FIG. 10A to FIG. 10E** **are diagrams in which the user manually switches the lane-level navigation route to the road-level navigation route.**

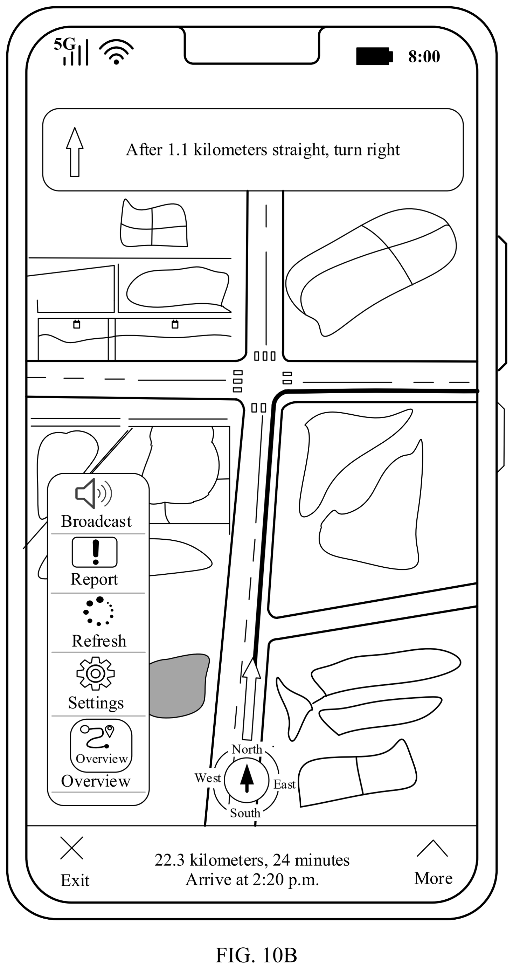

In a possible implementation, the lane-level navigation route is displayed on a navigation interface shown in FIG. 10A. The electronic device 100 may receive an operation of the user on the navigation interface shown in FIG. 10A, for example, an operation of sliding two fingers toward each other. In response to the user operation, the electronic device 100 may display a navigation interface shown in FIG. 10B. The road-level navigation route is displayed on the navigation interface. In this way, the lane-level navigation route can be switched to the road-level navigation route.

In addition to the operation of sliding two fingers toward each other, another operation may be used. This is not limited in this application.

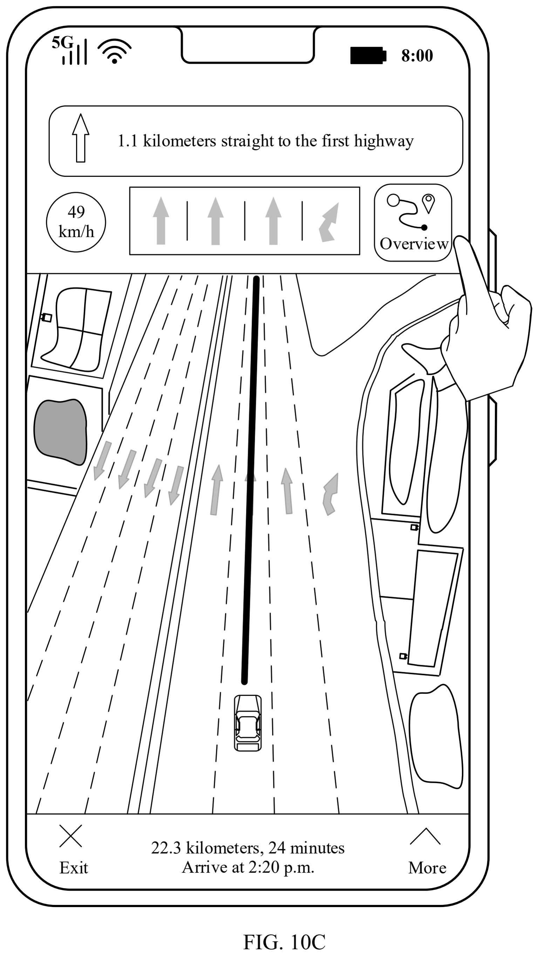

In another possible implementation, as shown in FIG. 10C, a lane-level navigation route is displayed on a navigation interface shown in FIG. 10C. The electronic device 100 may receive an input operation (for example, a tap) of the user on an overview control on the navigation interface shown in FIG. 10C. In response to the input operation of the user, the electronic device 100 may display the navigation interface including the road-level navigation route shown in FIG. 10B.

The electronic device 100 may also receive a slide operation of the user on the navigation interface including the lane-level navigation route, to view another lane-level navigation route that is not displayed.

Optionally, because the lane-level navigation route is displayed by segment, when the electronic device 100 slides to a location at which there is no lane-level navigation route, in a possible implementation, the electronic device 100 may not display a route. In another possible implementation, the electronic device 100 may display a road-level navigation route in an area in which the lane-level navigation route is not displayed.

In another embodiment, the electronic device 100 may also receive a slide operation performed by the user on the navigation interface including the lane-level navigation route, to view a navigation route of an undisplayed road section. Because the electronic device 100 obtains the high-precision navigation data by segment and displays the lane-level navigation route by segment, when the navigation interface is slid to view the navigation route of the undisplayed road section, the electronic device 100 may switch to a road-level navigation route when the electronic device 100 has not obtained high-precision navigation data of the undisplayed road section.

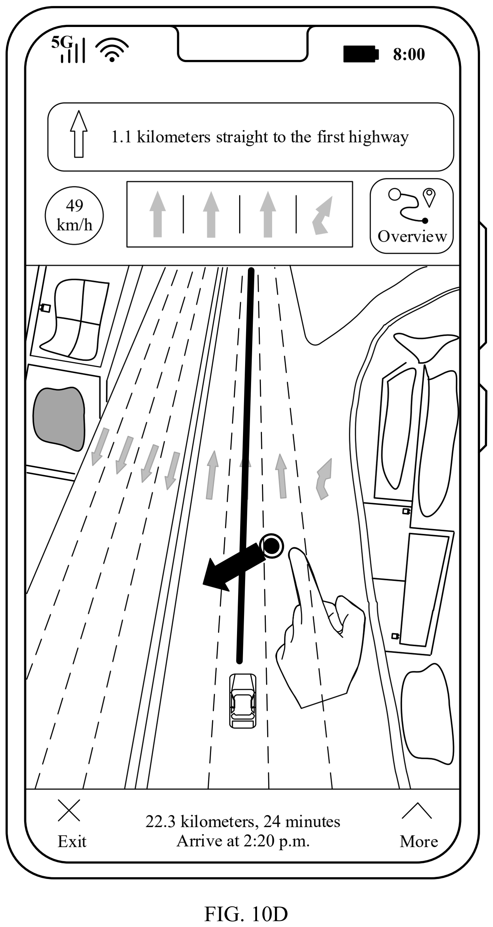

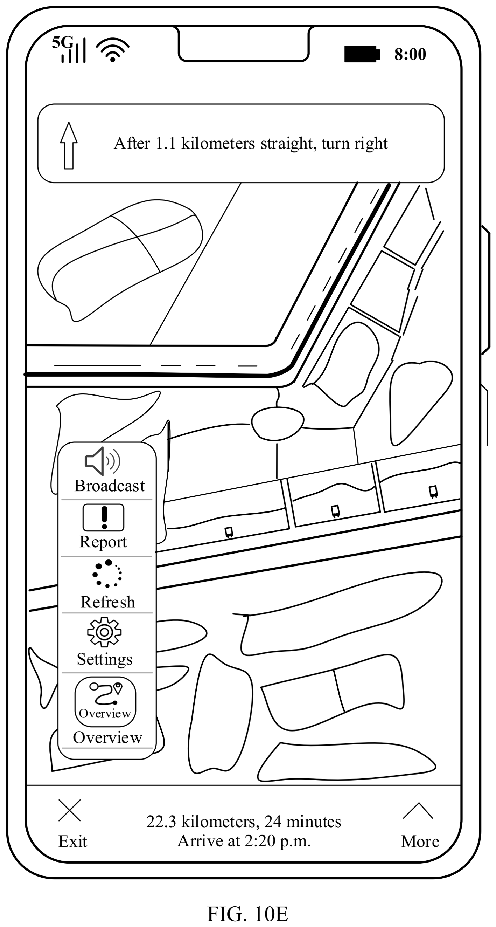

For example, as shown in FIG. 10D, the electronic device 100 may receive a slide operation of the user on a navigation interface including the lane-level navigation route shown in FIG. 10D, for example, a slide operation toward a lower left corner. In response to the slide operation of the user, the electronic device 100 may display a navigation interface shown in FIG. 10E. The road-level navigation route is displayed on the navigation interface.

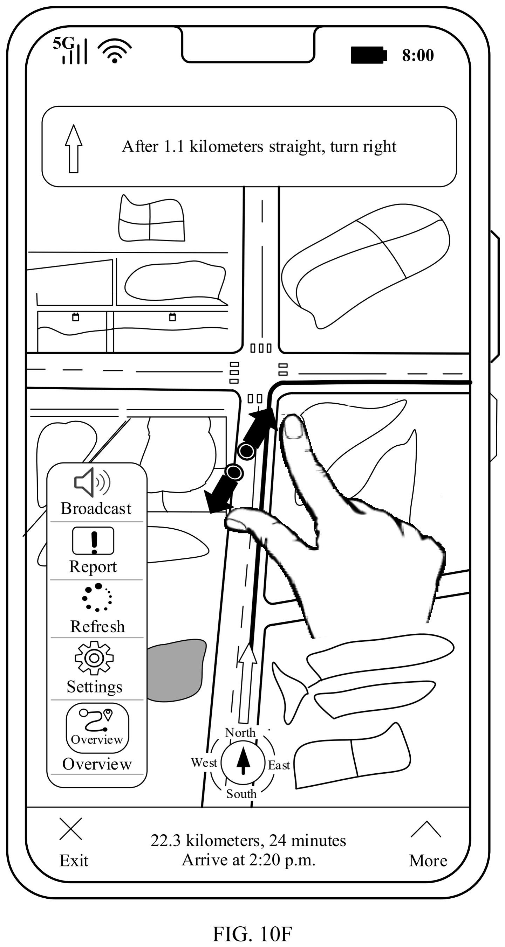

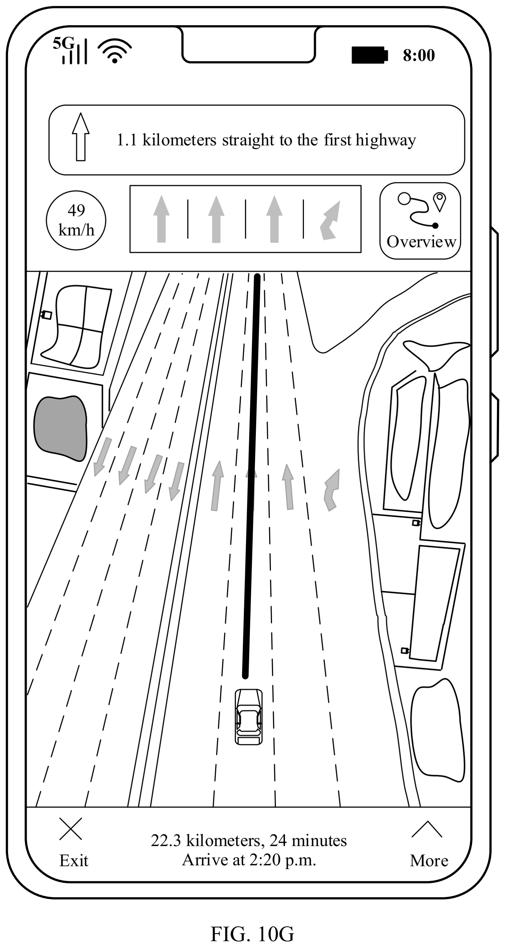

**FIG. 10F** **and** **FIG. 10G** **are diagrams in which the user manually switches the road-level navigation route to the lane-level navigation route.**

For example, as shown in FIG. 10D, the road-level navigation route is displayed on a navigation interface shown in FIG. 10D. The electronic device 100 may receive an operation of the user on the navigation interface shown in FIG. 10D, for example, an operation of reversely sliding two fingers. In response to the user operation, the electronic device 100 may display a navigation interface shown in FIG. 10E. The lane-level navigation route is displayed on the navigation interface. In this way, the user can manually switch from the road-level navigation route to the lane-level navigation route.

In addition to the operation of reversely sliding two fingers, another operation may be used. Alternatively, the navigation interface of the road-level navigation route may include a switch control, and the user may tap the control to switch the road-level navigation route to the lane-level navigation route. This is not limited in this application.

**Automatically switching between a lane-level navigation route and a road-level navigation route**

**In some embodiments, when the electronic device 100 cannot download high-precision road data from the server 200 due to a poor network, or the electronic device 100 fails to render the lane-level navigation route, the electronic device 100 cannot display the lane-level navigation route. The electronic device 100 may start to display the road-level navigation route based on an end point of the currently displayed lane-level navigation route and a destination entered by the user.**

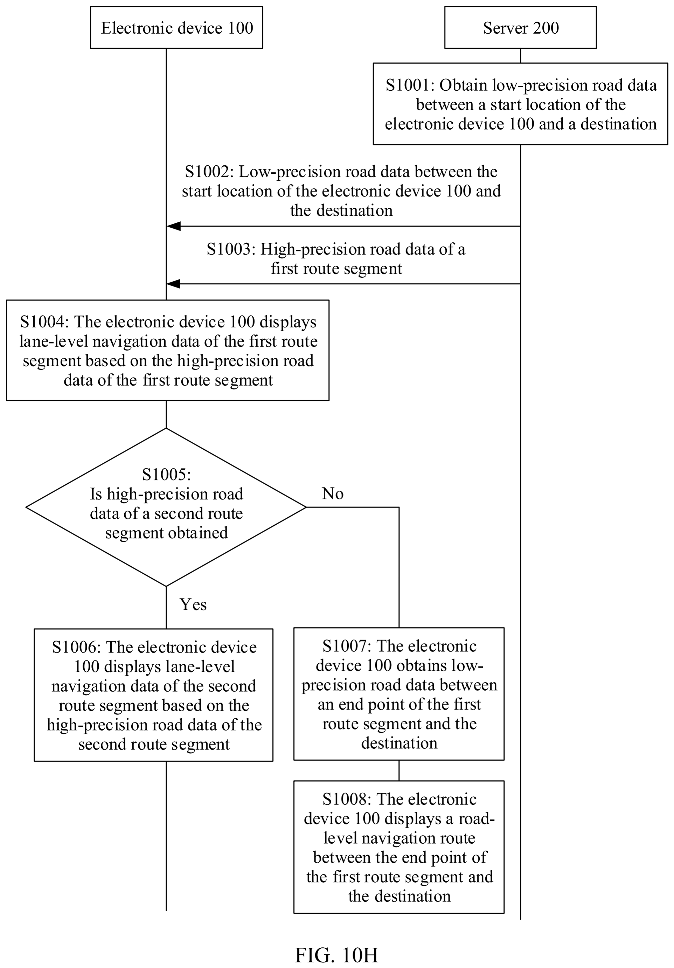

**FIG. 10H** **is a diagram of a method for automatically switching between the lane-level navigation route and the road-level navigation route by the electronic device 100.**

S1001: The server 200 obtains low-precision road data between a start location of the electronic device 100 and the destination.

S1002: The server 200 sends the low-precision road data between the start location of the electronic device 100 and the destination to the electronic device 100.

The start location of the electronic device 100 and the destination may be sent by the electronic device 100 to the server 200 when navigation starts.

S1003: The server 200 sends high-precision road data of a first route segment to the electronic device 100.

S1004: The electronic device 100 displays lane-level navigation data of the first route segment based on the high-precision road data of the first route segment.

The high-precision road data of the first route segment may be sent by the server 200 to the electronic device 100. The lane-level navigation data of the first route segment displayed by the electronic device 100 may be the lane-level navigation data shown in FIG. 1A.

S1005: The electronic device 100 needs to determine whether high-precision road data of a second route segment is obtained.

The vehicle travels on the first route segment. When a distance between a real-time location of the electronic device 100 and an end point of the first route segment is less than a preset length (for example, 1 km), the electronic device 100 needs to determine whether the high-precision road data of the second route segment is obtained.

When the electronic device 100 obtains the high-precision road data of the second route segment, S1006 is performed.

When the electronic device 100 fails to obtain the high-precision road data of the second route segment, S1007 and S1008 are performed.

S1006: The electronic device 100 displays lane-level navigation data of the second route segment based on the high-precision road data of the second route segment.

When the electronic device 100 obtains the high-precision road data of the second route segment, the electronic device 100 may display the lane-level navigation data of the second route segment based on the high-precision road data of the second route segment.

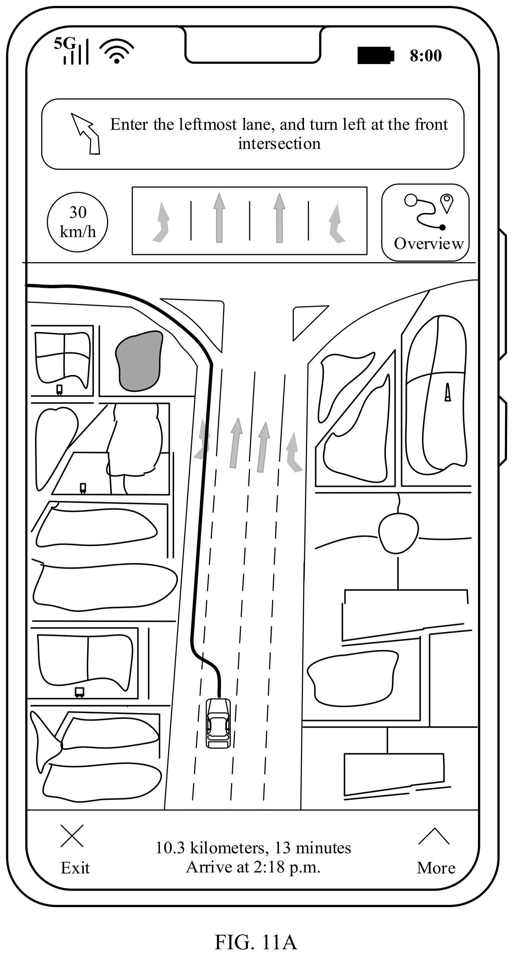

For example, FIG. 11A is a diagram in which the electronic device 100 displays the lane-level navigation data of the second route segment.

S1007: The electronic device 100 obtains low-precision road data between an end point of the first route segment and the destination.

S1008: The electronic device 100 displays a road-level navigation route between the end point of the first route segment and the destination.

When the electronic device 100 fails to obtain the high-precision road data of the second route segment, to enable the electronic device 100 to continue displaying the navigation route, the electronic device 100 may obtain the low-precision road data between the end point of the first route segment and the destination, and display the road-level navigation route between the end point of the first route segment and the destination based on the low-precision road data between the end point of the first route segment and the destination.

For example, as shown in FIG. 6C, the vehicle travels on the route segment A. When the vehicle travels to a location that is less than or equal to 1.5 km away from the location A, the electronic device 100 fails to obtain the high-precision road data of the route segment B. When the vehicle travels on the route segment B, the electronic device 100 cannot display the lane-level navigation route of the route segment B either. To continue providing the navigation service for the user, the electronic device 100 may display, based on the end point (the location A) of the route segment A, the road-level navigation route between the location A and the destination entered by the user.

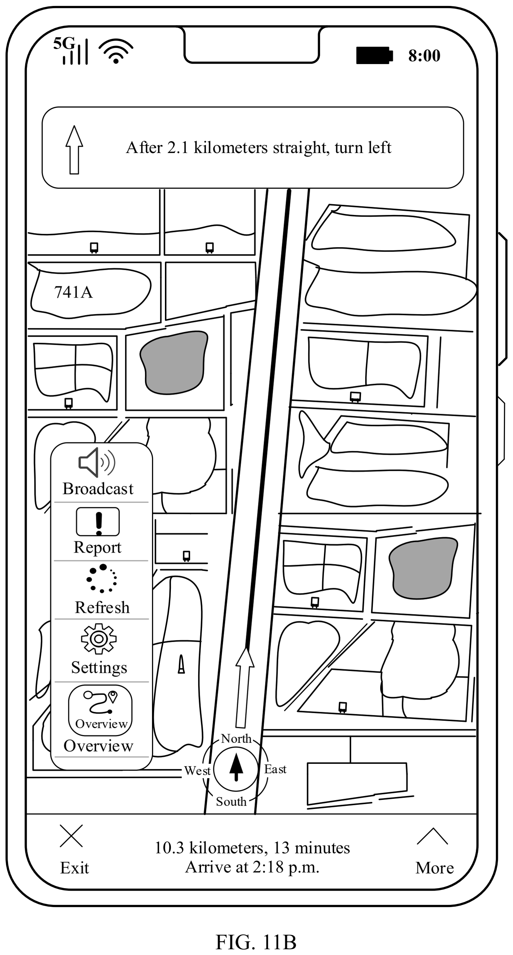

For example, FIG. 11B is a diagram in which the electronic device 100 displays the lane-level navigation data of the second route segment.

Optionally, before the electronic device 100 switches to the road-level navigation route, the electronic device 100 may also prompt the user whether to agree to switch to the road-level navigation route. When the user agrees, the electronic device 100 may switch to displaying the road-level navigation route. When the user does not agree, the electronic device 100 may continue waiting until the high-precision road data is obtained and the lane-level navigation route is displayed.

Optionally, after the electronic device 100 displays the road-level navigation route, the vehicle travels on the second route segment. When a distance between the real-time location of the electronic device 100 and an end point of the second route segment is less than the first length, the electronic device 100 needs to obtain high-precision road data of a fourth route segment. The fourth route segment is a route segment after the second route segment. Therefore, when the vehicle travels to the fourth route segment, the electronic device 100 may display a lane-level navigation route of the fourth route segment based on the high-precision road data of the fourth route segment, to continue providing the lane-level navigation service for the user. In this way, the electronic device 100 may automatically switch between the lane-level navigation route and the road-level navigation route, to ensure that the electronic device 100 can continuously provide the navigation service for the user.

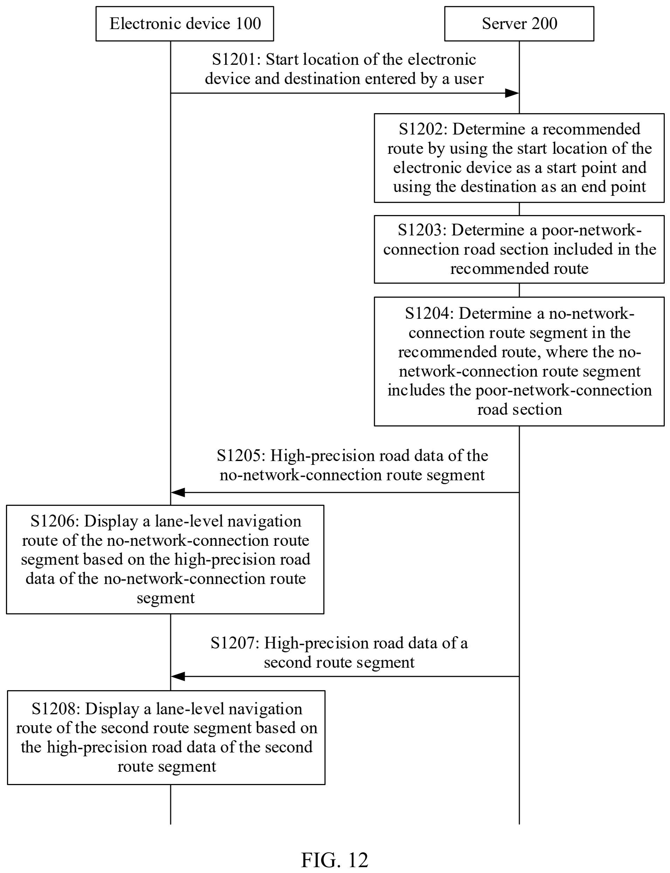

FIG. 12 is a schematic flowchart of a method for a navigation system.

S1201: An electronic device receives and responds to a first user operation, and sends a start location of the electronic device and a destination entered by a user to a server.

S1202: The server determines a recommended route by using the start location of the electronic device as a start point and using the destination as an end point.

S1203: The server determines a poor-network-connection road section included in the recommended route.

In a possible implementation, the poor-network-connection road section may be a special road section, for example, a tunnel road section or a canyon road section, and the server may determine the poor-network-connection road section based on the special road section.

In another possible implementation, the server may alternatively receive a large amount of feedback data reported by a user group, to determine the poor-network-connection road section.

S1204: The server determines a no-network-connection route segment in the recommended route, where the no-network-connection route segment includes the poor-network-connection road section.

In a possible implementation, a distance between an end point of the no-network-connection route segment and an end point of the poor-network-connection road section is equal to a first length. In this way, it can be ensured that when the electronic device moves to the no-network-connection route segment, high-precision road data of a next route segment adjacent to the no-network-connection route segment can be obtained.

In a possible implementation, the recommended route further includes at least two route segments, and lengths of the at least two route segments are the same. In this way, the server may obtain a plurality of route segments through division based on a preset length. For example, the preset length may be 3 km.

In a possible implementation, the lengths of the at least two route segments are equal to a first length. In other words, the first length is equal to the preset length.

In this way, when the server determines that the poor-network-connection road section exists in the recommended route, the server may add a route whose distance is the first length after the end point of the poor-network-connection road section to obtain the no-network-connection route segment, to ensure that when the electronic device moves to the no-network-connection route segment, the high-precision road data of the next route segment adjacent to the no-network-connection route segment can be obtained.

In a possible implementation, the at least two route segments are route segments before a first route segment; or the at least two route segments are route segments after a second route segment; or the at least two route segments include a route segment before the first route segment and a route segment after the second route segment.

In a possible implementation, the server is further configured to divide the recommended route based on the preset length, to obtain a plurality of route segments, where the plurality of route segments include a third route segment, a fourth route segment, and a fifth route segment, an end point of the third route segment is a start point of the fourth route segment, and an end point of the fourth route segment is a start point of the fifth route segment; the server is specifically configured to: when the fourth route segment includes the poor-network-connection road section, determine the end point of the no-network-connection route segment based on the end point of the poor-network-connection road section and the first length, and adjust the end point of the fourth route segment to the end point of the no-network-connection route segment, where the fourth route segment after the end point adjustment is the no-network-connection route segment; and the server is further configured to adjust the start point of the fifth route segment to the end point of the no-network-connection route segment, where the fifth route segment after the start point adjustment is the second route segment. The third route segment is the first route segment. In this way, when the poor-network-connection road section is located in the same route segment, the server may adjust the end point of the poor-network-connection road section, and the server may obtain the no-network-connection route segment according to this method.

For example, the third route segment may be the route segment B shown in FIG. 8A, the fourth route segment may be the route segment C shown in FIG. 8A, and the fifth route segment may be the route segment D shown in FIG. 8A.

For example, a start point of the poor-network-connection road section may be the start point 1 shown in FIG. 8A, and the end point of the poor-network-connection road section may be the end point 1 shown in FIG. 8A.

For example, the end point of the no-network-connection route segment may be the location C shown in FIG. 8B, the location E in FIG. 8C, or the location F shown in FIG. 8D.

The first route segment may be the route segment B shown in FIG. 8A.

The second route segment may be the route segment D shown in FIG. 8B, the route segment G shown in FIG. 8C, or the route segment H shown in FIG. 8D.

In a possible implementation, the server is specifically configured to: when the fourth route segment includes the poor-network-connection road section, determine the end point of the no-network-connection route segment based on the end point of the poor-network-connection road section and the first length, adjust the start point of the fourth route segment to the start point of the poor-network-connection road section, and adjust the end point of the fourth route segment to the end point of the no-network-connection route segment, where the fourth route segment after the start point adjustment and the end point adjustment is the no-network-connection route segment; and the server is specifically configured to adjust the end point of the third route segment to the start point of the poor-network-connection road section, where the third route segment after the end point adjustment is the first route segment. In this way, when the poor-network-connection road section is located in the same route segment, the server may adjust the start point and the end point of the poor-network-connection road section, and the server may obtain the no-network-connection route segment according to this method.

For example, the end point of the no-network-connection route segment may be the location C shown in FIG. 8B, the location E in FIG. 8C, or the location F shown in FIG. 8D.

For example, the first route segment may be the route segment F shown in FIG. 8B, FIG. 8C, or FIG. 8D.

In a possible implementation, the end point of the no-network-connection route segment is the same as the end point of the fourth route segment before the end point adjustment. For example, the end point of the no-network-connection route segment may be the location C shown in FIG. 8B.

Alternatively, the end point of the no-network-connection route segment is a first location in the fourth route segment before the end point adjustment. The first location may be the location F shown in FIG. 8D.

Alternatively, the end point of the no-network-connection route segment is a second location in the fifth route segment before the start point adjustment. The second location may be the location E shown in FIG. 8C.

In a possible implementation, the server is further configured to divide the recommended route based on the preset length, to obtain a plurality of route segments, where the plurality of route segments include a sixth route segment, a seventh route segment, and an eighth route segment, an end point of the sixth route segment is a start point of the seventh route segment, and an end point of the seventh route segment is a start point of the eighth route segment; the server is specifically configured to: when the seventh route segment includes a start point of the poor-network-connection road section, and the eighth route segment includes the end point of the poor-network-connection road section, determine the end point of the no-network-connection route segment based on the end point of the poor-network-connection road section and the first length, adjust the start point of the seventh route segment to the start point of the poor-network-connection road section, and adjust the end point of the seventh route segment to the end point of the no-network-connection route segment, where the seventh route segment after the start point adjustment and the end point adjustment is the no-network-connection route segment; and the server is further configured to: adjust the end point of the sixth route segment to the start point of the poor-network-connection road section, where the sixth route segment after the end point adjustment is the first route segment, and adjust the start point of the eighth route segment to the end point of the no-network-connection route segment, where the eighth route segment after the start point adjustment is the second route segment.

For example, the sixth route segment may be the route segment A shown in FIG. 8G, the seventh route segment may be the route segment B shown in FIG. 8G, and the eighth route segment may be the route segment C shown in FIG. 8G.

For example, the start point of the poor-network-connection road section may be the start point 2 shown in FIG. 8G, and the end point of the poor-network-connection road section may be the end point 2 shown in FIG. 8G.

For example, a start point of the no-network-connection route segment may be the start point 2 shown in FIG. 8H, and the end point of the no-network-connection route segment may be the location C shown in FIG. 8H. The first route segment may be the route segment J or the route segment A and the route segment J shown in FIG. 8H. The second route segment may be the route segment D shown in FIG. 8H.

For example, a start point of the no-network-connection route segment may be the start point 2 shown in FIG. 8I, and the end point of the no-network-connection route segment may be the location H shown in FIG. 8H. The first route segment may be the route segment J or the route segment A and the route segment J shown in FIG. 8H. The second route segment may be the route segment K shown in FIG. 8H.

For example, a start point of the no-network-connection route segment may be the start point 2 shown in FIG. 8J, and the end point of the no-network-connection route segment may be the location I shown in FIG. 8J. The first route segment may be the route segment J or the route segment A and the route segment J shown in FIG. 8J. The second route segment may be the route segment L or the route segment L and the route segment E shown in FIG. 8J.

In a possible implementation, the end point of the no-network-connection route segment is the same as the end point of the seventh route segment before the end point adjustment. For example, the end point of the no-network-connection route segment may be the location C shown in FIG. 8H.

Alternatively, the end point of the no-network-connection route segment is a third location in the seventh route segment before the end point adjustment. For example, the third location may be the location H shown in FIG. 8I.

Alternatively, the end point of the no-network-connection route segment is a fourth location in the eighth route segment before the start point adjustment. For example, the fourth location may be the location I shown in FIG. 8J.

In a possible implementation, the first length is related to a moving speed of the electronic device and the preset length.

With the same preset length, a higher moving speed of the electronic device indicates a longer first length. A lower moving speed of the electronic device indicates a shorter first length.

In a possible implementation, the electronic device is further configured to: receive low-precision road data that is sent by the server and that is obtained through planning by using the start location of the electronic device as the start point and using the destination as the end point, where the low-precision road data is used to display a road-level navigation route; and when the electronic device moves along the recommended route to the no-network-connection route segment, and the high-precision road data of the second route segment is not obtained, display a road-level navigation route of the second route segment.

The road-level navigation route does not include a lane quantity and a lane in which the electronic device is located.

In another possible implementation, when the electronic device moves along the recommended route to the no-network-connection route segment, and the high-precision road data of the second route segment is not obtained, the electronic device may alternatively display a road-level navigation route between a start point of the second route segment and the destination.

In this way, when the high-precision road data fails to be obtained, the electronic device may automatically switch to the road-level navigation route, and continue providing the navigation service for the user.

For details, refer to the descriptions of the embodiments in FIG. 10H, FIG. 11A, and FIG. 11B.

In a possible implementation, the electronic device is further configured to: send a real-time location of the electronic device to the server; the server is further configured to: determine a yaw location of the electronic device based on the recommended route and the real-time location of the electronic device; determine an updated recommended route by using the yaw location as the start point and using the destination as the end point; divide the updated recommended route to obtain a plurality of updated route segments, where the plurality of updated route segments include a ninth route segment and a tenth route segment; and send high-precision road data of the ninth route segment to the electronic device; and the electronic device is further configured to display a lane-level navigation route of the ninth route segment based on the high-precision road data of the ninth route segment.

In this way, when the electronic device yaws, the server may re-determine the updated recommended route.

For example, the ninth route segment may be the updated route segment E shown in FIG. 6H.

The tenth route segment may be the updated route segment F shown in FIG. 6H.

For details, refer to the descriptions of the embodiment in FIG. 7.

In a possible implementation, when the ninth route segment in the updated recommended route is not adjacent to the no-network-connection route segment, and the tenth route segment does not include the poor-network-connection road section, a distance of the ninth route segment is less than a distance of the tenth route segment. In this way, a speed of displaying the lane-level navigation route of the ninth route segment by the electronic device can be increased.

For example, the ninth route segment may be the updated route segment H shown in FIG. 6I or FIG. 6J.

The tenth route segment may be the updated route segment I shown in FIG. 6I or the updated route segment L shown in FIG. 6J.

S1205: The electronic device obtains high-precision road data of the no-network-connection route segment from the server when the electronic device moves to the first route segment in the recommended route, where the no-network-connection route segment is a next route segment adjacent to the first route segment in the recommended route.

In a possible implementation, the lane-level navigation route includes one or more of the following information: a vehicle traveling direction, a lane quantity, a lane in which a vehicle is located, an index route, and prompt information.

In a possible implementation, an end point of the first route segment is the start point of the poor-network-connection road section, and the start point of the no-network-connection route segment is the start point of the poor-network-connection road section. In this way, when the server determines that the poor-network-connection road section exists in the recommended route, the server may use the start point of the poor-network-connection road section as the start point of the no-network-connection route segment. In this way, when a length of the poor-network-connection road section is long, the start point of the poor-network-connection road section is used as the start point of the no-network-connection route segment, so that a distance length of the no-network-connection route segment can be reduced, to increase a speed of obtaining the high-precision road data of the no-network-connection route segment by the electronic device.

S1206: The electronic device displays a lane-level navigation route of the no-network-connection route segment based on the high-precision road data of the no-network-connection route segment.

S1207: Obtain high-precision road data of the second route segment from the server when the electronic device moves to the no-network-connection route segment in the recommended route, where the second route segment is a next route segment, adjacent to the no-network-connection route segment, in the recommended route.

S1208: The electronic device displays a lane-level navigation route of the second route segment based on the high-precision road data of the second route segment.

In a possible implementation, the electronic device is specifically configured to send a first message to the server when the electronic device moves between the end point of the no-network-connection route segment and the end point of the poor-network-connection road section; and the server is further configured to send the high-precision road data of the second route segment to the electronic device in response to the first message. In this way, when the electronic device moves between the end point of the poor-network-connection road section in the no-network-connection route segment and the end point of the no-network-connection route segment, the road section does not include the poor-network-connection road section, and the electronic device may obtain the high-precision road data of the second route segment.

In this way, the server may divide the recommended route into a plurality of route segments, and the electronic device may obtain high-precision road data of each route segment by segment, and display a lane-level navigation route by segment. In this way, a speed of obtaining the high-precision road data by the electronic device is increased, and a speed and accuracy of displaying the lane-level navigation route by the electronic device are improved. In addition, when the recommended route includes the poor-network-connection road section, the server may divide the poor-network-connection road section into one route segment (the no-network-connection route segment), to ensure that when the electronic device moves to the no-network-connection route segment, the high-precision road data of the next route segment adjacent to the no-network-connection route segment can be obtained.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A navigation system, wherein the system comprises an electronic device and a server, wherein
the electronic device is configured to: receive and respond to a first user operation, and send a start location of the electronic device and a destination entered by a user to the server;
the server is configured to determine a recommended route by using the start location of the electronic device as a start point and using the destination as an end point;
the server is further configured to determine a poor-network-connection road section comprised in the recommended route;
the server is further configured to determine a no-network-connection route segment in the recommended route, wherein the no-network-connection route segment comprises the poor-network-connection road section;
the electronic device is further configured to: obtain the recommended route from the server, and perform navigation based on the recommended route; and
the electronic device is specifically configured to:
obtain high-precision road data of the no-network-connection route segment from the server when the electronic device moves to a first route segment in the recommended route, wherein the no-network-connection route segment is a next route segment adjacent to the first route segment in the recommended route,
display a lane-level navigation route of the no-network-connection route segment based on the high-precision road data of the no-network-connection route segment,
obtain high-precision road data of a second route segment from the server when the electronic device moves to the no-network-connection route segment in the recommended route, wherein the second route segment is a next route segment, adjacent to the no-network-connection route segment, in the recommended route, and
display a lane-level navigation route of the second route segment based on the high-precision road data of the second route segment.

2. The system according to claim 1, wherein a distance between an end point of the no-network-connection route segment and an end point of the poor-network-connection road section is equal to a first length.

3. The system according to claim 2, wherein the recommended route further comprises at least two route segments, and lengths of the at least two route segments are the same.

4. The system according to claim 3, wherein the lengths of the at least two route segments are equal to the first length.

5. The system according to claim 3 or 4, wherein the at least two route segments are route segments before the first route segment; or
the at least two route segments are route segments after the second route segment; or
the at least two route segments comprise a route segment before the first route segment and a route segment after the second route segment.

6. The system according to any one of claims 1 to 5, wherein an end point of the first route segment is a start point of the poor-network-connection road section, and a start point of the no-network-connection route segment is the start point of the poor-network-connection road section.

7. The system according to any one of claims 1 to 6, wherein the electronic device is specifically configured to send a first message to the server when the electronic device moves between the end point of the no-network-connection route segment and the end point of the poor-network-connection road section; and
the server is further configured to send the high-precision road data of the second route segment to the electronic device in response to the first message.

8. The system according to any one of claims 2 to 5, wherein the server is further configured to divide the recommended route based on a preset length, to obtain a plurality of route segments, wherein the plurality of route segments comprise a third route segment, a fourth route segment, and a fifth route segment, an end point of the third route segment is a start point of the fourth route segment, and an end point of the fourth route segment is a start point of the fifth route segment;
the server is specifically configured to:
when the fourth route segment comprises the poor-network-connection road section, determine the end point of the no-network-connection route segment based on the end point of the poor-network-connection road section and the first length, and
adjust the end point of the fourth route segment to the end point of the no-network-connection route segment, wherein the fourth route segment after the end point adjustment is the no-network-connection route segment; and
the server is further configured to:
adjust the start point of the fifth route segment to the end point of the no-network-connection route segment, wherein the fifth route segment after the start point adjustment is the second route segment, wherein
the third route segment is the first route segment.

9. The system according to claim 8, wherein the server is specifically configured to:
when the fourth route segment comprises the poor-network-connection road section, determine the end point of the no-network-connection route segment based on the end point of the poor-network-connection road section and the first length, and
adjust the start point of the fourth route segment to a start point of the poor-network-connection road section, and adjust the end point of the fourth route segment to the end point of the no-network-connection route segment, wherein the fourth route segment after the start point adjustment and the end point adjustment is the no-network-connection route segment; and
the server is further configured to adjust the end point of the third route segment to the start point of the poor-network-connection road section, wherein the third route segment after the end point adjustment is the first route segment.

10. The system according to any one of claims 2 to 5, wherein the server is further configured to divide the recommended route based on a preset length, to obtain a plurality of route segments, wherein the plurality of route segments comprise a sixth route segment, a seventh route segment, and an eighth route segment, an end point of the sixth route segment is a start point of the seventh route segment, and an end point of the seventh route segment is a start point of the eighth route segment;
the server is specifically configured to:
when the seventh route segment comprises a start point of the poor-network-connection road section, and the eighth route segment comprises the end point of the poor-network-connection road section, determine the end point of the no-network-connection route segment based on the end point of the poor-network-connection road section and the first length, and
adjust the start point of the seventh route segment to the start point of the poor-network-connection road section, and adjust the end point of the seventh route segment to the end point of the no-network-connection route segment, wherein the seventh route segment after the start point adjustment and the end point adjustment is the no-network-connection route segment; and
the server is further configured to:
adjust the end point of the sixth route segment to the start point of the poor-network-connection road section, wherein the sixth route segment after the end point adjustment is the first route segment, and
adjust the start point of the eighth route segment to the end point of the no-network-connection route segment, wherein the eighth route segment after the start point adjustment is the second route segment.

11. The system according to any one of claims 8 to 10, wherein the first length is related to a moving speed of the electronic device and the preset length.

12. The system according to any one of claims 1 to 11, wherein
the electronic device is further configured to:
receive low-precision road data that is sent by the server and that is obtained through planning by using the start location of the electronic device as the start point and using the destination as the end point, wherein the low-precision road data is used to display a road-level navigation route; and
when the electronic device moves along the recommended route to the no-network-connection route segment, and the high-precision road data of the second route segment is not obtained, display a road-level navigation route of the second route segment.

13. The system according to any one of claims 1 to 12, wherein the electronic device is further configured to send a real-time location of the electronic device to the server;
the server is further configured to:
determine a yaw location of the electronic device based on the recommended route and the real-time location of the electronic device,
determine an updated recommended route by using the yaw location as the start point and using the destination as the end point,
divide the updated recommended route to obtain a plurality of updated route segments, wherein the plurality of updated route segments comprise a ninth route segment and a tenth route segment, and
send high-precision road data of the ninth route segment to the electronic device; and
the electronic device is further configured to display a lane-level navigation route of the ninth route segment based on the high-precision road data of the ninth route segment.

14. The system according to claim 13, wherein when the ninth route segment in the updated recommended route is not adjacent to the no-network-connection route segment, and the tenth route segment does not comprise the poor-network-connection road section, a distance of the ninth route segment is less than a distance of the tenth route segment.

15. The system according to any one of claims 1 to 14, wherein the lane-level navigation route comprises one or more of the following information: a vehicle traveling direction, a lane quantity, a lane in which a vehicle is located, an index route, and prompt information.

16. A navigation method, wherein the method comprises:
receiving and responding to, by an electronic device, a first user operation, and sending a start location of the electronic device and a destination entered by a user to a server; and
receiving, by the electronic device, a recommended route sent by the server, and performing navigation based on the recommended route, wherein the recommended route is determined by the server based on the start location of the electronic device and the destination, wherein
the performing, by the electronic device, navigation based on the recommended route specifically comprises:
obtaining, by the electronic device, high-precision road data of a no-network-connection route segment from the server when the electronic device moves to a first route segment in the recommended route, wherein the no-network-connection route segment is a next route segment adjacent to the first route segment in the recommended route, the no-network-connection route segment is determined by the server based on a poor-network-connection road section in the recommended route, and the no-network-connection route segment comprises the poor-network-connection road section;
displaying, by the electronic device, a lane-level navigation route of the no-network-connection route segment based on the high-precision road data of the no-network-connection route segment;
obtaining, by the electronic device, high-precision road data of a second route segment from the server when the electronic device moves to the no-network-connection route segment in the recommended route, wherein the second route segment is a next route segment, adjacent to the no-network-connection route segment, in the recommended route; and
displaying, by the electronic device, a lane-level navigation route of the second route segment based on the high-precision road data of the second route segment.

17. The method according to claim 16, wherein a distance between an end point of the no-network-connection route segment and an end point of the poor-network-connection road section is equal to a first length.

18. The method according to claim 17, wherein the recommended route further comprises at least two route segments, and lengths of the at least two route segments are the same.

19. The method according to claim 18, wherein the lengths of the at least two route segments are equal to the first length.

20. The method according to claim 19, wherein the at least two route segments are route segments before the first route segment; or
the at least two route segments are route segments after the second route segment; or
the at least two route segments comprise a route segment before the first route segment and a route segment after the second route segment.

21. The method according to any one of claims 16 to 20, wherein an end point of the first route segment is a start point of the poor-network-connection road section, and a start point of the no-network-connection route segment is the start point of the poor-network-connection road section.

22. The method according to any one of claims 16 to 21, wherein the obtaining, by the electronic device, high-precision road data of a second route segment from the server when the electronic device moves to the no-network-connection route segment in the recommended route specifically comprises:
when the electronic device moves between the end point of the no-network-connection route segment and the end point of the poor-network-connection road section, sending, by the electronic device, a first message to the server, wherein the first message is used to obtain the high-precision road data of the second route segment.

23. The method according to any one of claims 16 to 22, wherein before the performing, by the electronic device, navigation based on the recommended route, the method further comprises:
obtaining, by the electronic device, low-precision road data, wherein the low-precision road data is low-precision road data obtained through planning by using the start location of the electronic device as a start point and using the destination as an end point, and the low-precision road data is used to display a road-level navigation route; and
after the displaying, by the electronic device, a lane-level navigation route of the no-network-connection route segment based on the high-precision road data of the no-network-connection route segment, the method further comprises:
when the electronic device moves along the recommended route to the no-network-connection route segment, and the high-precision road data of the second route segment is not obtained, displaying, by the electronic device, a road-level navigation route of the second route segment.

24. The method according to any one of claims 16 to 23, wherein before the performing, by the electronic device, navigation based on the recommended route, the method further comprises:
sending, by the electronic device, a real-time location of the electronic device to the server;
after the displaying, by the electronic device, a lane-level navigation route of the second route segment based on the high-precision road data of the second route segment, the method further comprises:
receiving, by the electronic device, an updated recommended route sent by the server, and performing navigation based on the updated recommended route, wherein the updated recommended route is related to a yaw location of the electronic device and the destination; and
the performing, by the electronic device, navigation based on the updated recommended route specifically comprises:
receiving, by the electronic device, high-precision road data that is of a ninth route segment and that is sent by the server, and displaying a lane-level navigation route of the ninth route segment based on the high-precision road data of the ninth route segment; and
when the electronic device moves to the ninth route segment in the updated recommended route, receiving, by the electronic device, high-precision road data that is of a tenth route segment and that is sent by the server, and displaying a lane-level navigation route of the tenth route segment based on the high-precision road data of the tenth route segment.

25. The method according to claim 24, wherein when the ninth route segment in the updated recommended route is not adjacent to the no-network-connection route segment, and the tenth route segment does not comprise the poor-network-connection road section, a distance of the ninth route segment is less than a distance of the tenth route segment.

26. The method according to any one of claims 16 to 25, wherein the lane-level navigation route comprises one or more of the following information: a vehicle traveling direction, a lane quantity, a lane in which a vehicle is located, an index route, and prompt information.

27. An electronic device, wherein the electronic device comprises a processor and a memory, the memory is coupled to the processor, the memory is configured to store computer program code, the computer program code comprises computer instructions, and the processor invokes the computer instructions to perform the method according to any one of claims 16 to 26.

28. A computer-readable storage medium, configured to store computer instructions, wherein when the computer instructions are run on an electronic device, the electronic device is enabled to perform the method according to any one of claims 16 to 26.

29. A computer program product, wherein when the computer program product runs on an electronic device, the electronic device is enabled to perform the method according to any one of claims 16 to 26.
